# EUROPEAN PATENT SPECIFICATION

(11) **EP 4 554 797 B1**
(45) Date of publication and mention of the grant of the patent: **29.07.2026**
(21) Application number: 23751357.7
(22) Date of filing: 13.07.2023
(51) Int. Cl.: B42D 25/382, B42D 25/318, B42D 25/305, B42D 25/28, B41M 3/14, C09D 11/037, C09K 11/06, G09F 3/02

(54) **ANTI-COUNTERFEITING LABEL FOR THE AUTHENTICATION OF GOODS**
FÄLSCHUNGSSICHERES ETIKETT ZUR AUTHENTIFIZIERUNG VON WAREN
ETIQUETTE ANTI-CONTREFAÇON POUR L'AUTHENTIFICATION DE MARCHANDISES

(30) Priority: 13.07.2022 IT 202200014746
(43) Date of publication of application: 21.05.2025
(73) Proprietor: Politecnico di Milano, 20133 Milano (IT)
(72) Inventor: CASARI, Carlo Spartaco, 20143 Milano (IT); FACIBENI, Anna, 20147 Milano (IT); PEGGIANI, Sonia, 29010 San Nicolo' (IT); VIDALE, Alessandro, 20142 Milano (IT); BERTARELLI, Chiara, 23900 Lecco (IT); MILANI, Alberto, 22020 Nesso (IT)
(74) Representative: Palladino, Saverio Massimo
(86) International application number: PCT/IB2023/057186
(87) International publication number: WO 2024/013693

(56) References cited:
- WO-A1-00/77104
- US-A1- 2002 025 490
- US-A1- 2006 038 979
- US-A1- 2015 185 156

## Description

### FIELD OF THE INVENTION

The present invention concerns an anti-counterfeiting label with polymeric inks based on optically active materials for the identification of goods, as well as a process for its preparation and the mode of use thereof.

### BACKGROUND

The problem of product counterfeiting is currently very much felt due to the emergence of parallel markets, which produce products similar to those of the originator companies, but at a reduced cost, while appearing indistinguishable.

It has recently been attested by government offices, such as the Senate of the Republic and the financial police, how the counterfeiting phenomenon significantly affects the Italian production system.

The greater possibilities of the spread of counterfeiting linked to the expansion of the world trade and the continuing economic crisis increase the need to combat the phenomenon. In addition to having a direct effect on the national production and to being able to become a problem for the health of the citizens, given the poor quality or even toxicity of the materials, counterfeiting impacts on tax and contribution revenues, represents a catalyst for illicit conducts (money laundering, evasion, abusive trade) and, by damaging intellectual property, hinders the remuneration of the activity fuelled by human innovation, slowing down the competitiveness of the production systems affected by the phenomenon. To the extent that counterfeiting constitutes a clear "multiplier" of illegality, the fight against the counterfeiting industry simultaneously results in a monitoring of the illicit profiles connected to counterfeiting such as those mentioned.

The protection and the traceability of the products are therefore useful not only for luxury goods, such as clothing, bags, watches and jewellery, but also for the strictly personal goods, such as personal documents, including any type of identity card, payment cards (VISA, MasterCard, etc.) or cards.

Further products for which it would be appropriate to extend authentication systems are medical products, including medical devices, drugs and even products in the food chain. More and more companies are relying on traceability systems, and even on the blockchain, to guarantee the exact origin of their product to the end customer. Applying an anti-counterfeiting system to each individual product would make it more desirable for the customer, who would be safer and more aware of buying a certified product that complies with the current regulations. This would induce a greater palatability for the market of the consumers.

Therefore, the need is still felt for anti-counterfeiting systems that are not expensive and therefore do not considerably affect the final cost of the wares, do not require particular transformations of systems already set up for the production of the wares, and that guarantee authenticity and clear traceability of the origin of the final product. In addition to the originality of the product, it is in fact necessary to ensure that it is possible to trace back its origin and its raw materials.

In addition, it is important to have the possibility of easily detecting said anti-counterfeiting systems, for the control of the good in question.

For this purpose, the use of the Raman technique and of materials sensitive to it and identifiable with it has recently emerged as an option.

Raman spectroscopy is a technique of analysis of materials based on the phenomenon of diffusion of an incident monochromatic electromagnetic radiation by the analysed sample. It is a technique widely used in the study of materials, whether in the solid or liquid state or in the gas phase, since it is non-destructive, fast and does not require special conditions for the execution of the measurement (for example, it is not required to carry out the measurement under vacuum conditions) and can be carried out directly on the sample without any preparation.

Through the Raman spectroscopy, by exploiting the uniqueness of the signals emitted in the form of peaks by a material in the form of ink containing multiple compounds, it is possible to obtain the spectra of the coding compositions, in order to be able to authenticate different types of goods.

A limited number of compounds, in the form of carbon chains characterized by alternating single and triple bonds, or by consecutive double bonds detectable by Raman, is available on the market, but it is very difficult to use them correctly since they have numerous disadvantages, namely the lack of stability, the presence of an unwanted fluorescence background signal, such as for example in case of 9,10-bis-(phenyl-ethynyl) anthracene, and the lack of well-defined and distinguishable signals if said compounds or inks were mixed without a proper selection.

For example, it is common to use mixtures containing azomethines or polycyclic chromophores and coding isoindoline compounds dispersed in polymeric matrices for coding goods, however said substances emit a Raman signal that is not easily identifiable because it is superimposed on background signals, and furthermore another disadvantage is that the molecules listed appear coloured to the naked eye, thus being easily identifiable when deposited, through a special support, on the good to be marked.

The use of mixtures of squarine compounds as identifying and marking materials is then reported. These compounds emit a signal in the Raman spectrum when irradiated with light in the region of the near infrared (NIR) range, in particular in the wavelengths from about 680 up to 1440 nm.

However, the squarine compounds, as identifying active materials, have the disadvantage of emitting in this restricted range of wavelengths. In fact, wavelengths lower than about 680 nanometres would not be recommendable because paper, toners, pigments, ink dyes and other similar materials that may be present on the goods to be protected with the anti-counterfeiting label, generally absorb at these wavelengths and therefore could mask the Raman signal of the component detectable by Raman, while components detectable by Raman at wavelengths greater than 1400 nanometres are not recommended because they are hard to obtain and use. Furthermore, squarine and its derivatives are known to emit fluorescence at wavelengths between 600 and 2500 nm, thus making the Raman spectrum obtained by irradiation very crowded and hard to read.

To overcome this problem of interactions and stability, the use of marking materials with polarizable chromophore groups, having emissions of peaks in the region of the near IR (NIR) range when irradiated by a source having wavelength in the field of the near IR (NIR) range, has emerged.

In light of the prior art, it should be noted that these compounds need to be analysed by using a monochromatic light having wavelength in the field of the near IR (NIR) range as a Raman source. However, this on a large scale implies an overheating of the samples and a poor excitation efficiency. Furthermore, because of this lower excitation efficiency, the use of high concentrations of marking materials is necessary.

In addition, the compounds mentioned above are always used for the direct "writing" of a code, by creating different and complicated combinations of marking materials, for the formation of a single marking mixture, to be used as a single code. The single marking mixture is thus entrapped within a polymer, and subsequently converted into nano- or microparticles. Precisely because of the complexity of the particles, it is subsequently necessary to conjugate them, through for example hybridization (HCR), to increase and make their identification signal more readable. The resulting codes are not only composed of various marking materials, but are therefore of complex and long realization and subsequent complicated reading.

Patent application WO 00/77104 A1 describes the use of coloured pigments having a precise spectral response whose behaviour deviates from the one predicted when they are suitably mixed in precise concentrations. The deposition of the pigments is preferably carried out through an inkjet printer. A problem with this technique is that the spectral emissions by other materials of the label, other than the pigments, can interfere with those of the pigments, making the reading of the label itself complex or ineffective. Furthermore, the additive combination of pigments that causes the non-linear emission has the disadvantage of requiring relatively high amounts of pigments, with consequent economic costs when high numbers of labels have to be made.

Patent application US 2015/0185156 A1 describes nanosheets comprising at least two nanostructures comprising metals such as gold, silver and copper, and a support. The nanostructures are active in surface-enhanced Raman spectroscopy (SERS), while the support holds the at least two SERS-active nanostructures at a distance relative to each other, to avoid erosion of the SERS signal that could occur by aggregation of said nanostructures. The SERS-active nanostructures are intended for use in detection by means of a SERS signal.

Patent application US 2006/0038979 A1 describes a method for applying security tags and/or data to currency and other documents that could be counterfeited. The method comprises applying to at least a portion of the currency or document a senser tag comprising a metal nanoparticle, a Raman active molecule associated with the surface of the metal nanoparticles, and an encapsulant surrounding said metal nanoparticle and said Raman-active molecule. The tag may identified by a system comprising a processor, a detector, and a reference database coupled to the processor and comprising a list of possible components of the tag to be identified.

Patent application US 2002/0025490 A1 describes a method for telling apart genuine articles from counterfeited ones by means of Raman spectroscopy, consisting in equipping the genuine item with a molecular tag, by marking or label incorporating in the item special chemicals capable of giving intense Raman spectra under near-infrared (NIR) laser excitation.

In light of the lack of solutions in the prior art and of the disadvantages of those available listed above, it is still felt to date the need to provide an anti-counterfeiting device that is easy to obtain, which is easy to detect and hard to counterfeit. In addition, with a view to using systems and methods that favour energy savings, both at the synthesis and use stage, there is still a need to provide alternatives to the current known anti-counterfeiting labels, which use easily detectable materials, in a direct, simple and inexpensive way and which allow to effectively mark the goods to be checked, without requiring a high concentration or being easily identifiable and copyable.

### SUMMARY OF THE INVENTION

This aim is achieved by the present invention, which in a first aspect thereof concerns an anti-counterfeiting label as defined in claim 1.

In a second aspect thereof, the invention concerns the preparation of each of said at least three inks as defined in claim 13.

In a third aspect thereof, the invention concerns a method for preparing an anti-counterfeiting label as defined in claim 14.

Finally, in the fourth aspect thereof the invention concerns a method for determining the authenticity of an item provided with a security code as defined in claim 15.

### BRIEF DESCRIPTION OF THE DRAWINGS

Further features and advantages of the invention will be apparent after reading the following description provided by way of a non-limiting example, with the aid of the figures illustrated in the accompanying tables, wherein:
Figure 1: set up of submerged arc discharge in liquid (SADL), for the production of active material according to the invention, on site;
Figure 2: set up of laser ablation in liquid (PLAL), for the production of active material according to the invention, on site;
Figure 3: set up of a High Performance Liquid Chromatography (HPLC) apparatus for the separation of the active materials according to the invention, obtained according to Example 1;
Figure 4: chromatograms of the fractions of active materials obtained according to Example 1.3 and separated according to Example 1.4;
Figure 5: SEM image of silver nanoparticles usable in the inks of the invention;
Figure 6: deposition sequence of the inks obtained in Example 1.5 and deposited in the anti-counterfeiting label according to Example 2;
Figure 7: image of a prototype of anti-counterfeiting label according to the invention, produced on a flexible 3D support, obtained with Raise3D Premium PC filament from a 3D printer, characterized by the presence of 30 cavities and of dimensions 3 x 3.4 x 0.3 cm³ with a PVC adhesive layer applied on the upper part;
Figure 8: set-up of the measurement carried out with portable Raman (Cora 100 by Anton-Paar) in ambient light conditions;
Figure 9: Raman spectra, in the spectral region of interest, of seven inks according to the invention, obtained according to Example 1.5;
Figure 10: Raman spectra, in the spectral region of interest, of seven inks according to the invention, obtained according to Example 1.5, after 1 year from deposition, according to Example 4.1;
Figure 11: the Raman spectra of an ink prepared according to Example 1.5 are shown, immediately after preparation, after a heat treatment at 135 °C and after UV irradiation, which demonstrate the stability of the inks of the invention under these conditions.

### DETAILED DESCRIPTION OF THE INVENTION

In the present invention the following definitions are adopted with the following meanings:
- "active material detectable by Raman" or "nanostructured active material detectable by Raman", or even just "active material", means a compound that emits a signal, in the form of peaks or wavelength bands in the field of the visible (Vis) or near infrared (NIR) range when irradiated with a monochromatic radiation of visible wavelength. The particularly preferred components detectable by Raman are those showing a Raman spectrum with high peaks as intensity and distinct from each other in terms of resolution, in the spectral region where most of the paper dyes and dyes or pigments are not detectable by Raman. Said detectable Raman component is present in any effective amount to allow its detection and/or identification through the Raman spectrum, when the anti-counterfeiting label is irradiated with monochromatic radiation of visible wavelength.

For the purposes of the present invention, the active material detectable by Raman is a carbon nanostructure having sp-hybridized C atoms in chain, which may be compounds comprising at least one triple bond or compounds having cumulated double bonds, called cumulenes; preferably, in the case of compounds containing a triple bond, these are compounds containing several triple bonds, known as polyynes, and in particular those with alternating triple bonds (compounds in which two successive triple bonds in the chain are separated by a single bond). The definition of nanostructure refers to the individual units of active material in the ink whose optical and electronic properties depend on the length of the chain. They are 1D systems and at least two dimensions are at the nanoscale.

The length of the chain, and thus the number of carbon atoms in the chain can be measured by means of a UV-visible spectrometer (UV-Vis) after the fractions of different length have been separated by means of High Performance Liquid Chromatography (HPLC). As a UV-Vis spectrometer it is possible to use for example a SPD-M20A (DAD) Shimadzu UV-1800 UV/visible photodiode instrument with a spectral range from 190 to 1100 nm, whereas as an apparatus (HPLC) it is possible to use a Shimadzu Prominence instrument equipped with a SIL-20A HT autosampler, a CTO-20A column furnace, an LC-20AD quaternary pump and collected through a FRC-10A fraction collector connected to a LabSolutions LC/GC software. The systems with alternating C triple bonds have been studied by spectroscopy for years. The correlation between the number of C atoms and the electron absorption spectrum is well known to the person skilled in the art, and is described for example in the article "Silylation as a protective method for terminal alkynes in oxidative couplings: A general synthesis of the parent polyynes H(C≡C)nH (n = 4-10, 12)", R. Eastmond et al., Tetrahedron (1972) vol. 28, pp. 4601-4616, in which it is highlighted that the higher the number of C atoms, the more the characteristic peaks shift towards the red. The position of the peaks is also affected by the termination of the chain;
- "ink" means a mixture comprising at least one active material detectable by Raman and at least one polymeric carrier. Said mixture may or may not have a colouring and may therefore also be completely transparent in the absence of a pigmented additive;
- "source in the visible range" means a monochromatic light source that emits at a wavelength comprised in the range from 380 to 780 nm, preferably in the green at 532 nm and with a power of 70 mW;
- "substantially circular" means having a shape or properties similar to those of the circle or of the circumference or representable by means of a circle or of a circumference;
- "Surface Enhanced Raman Spectroscopy (SERS)" means a surface-enhanced Raman spectroscopy, i.e. a surface-sensitive technique that improves Raman scattering by molecules adsorbed on rough metal surfaces or by nanostructures such as, for example, metal nanoparticles or nanotubes. The enhancement factor can range from 10⁶ to 10¹⁰ up to 10¹¹, which means that the technique can detect individual molecules; and
- "original item" means a good of any nature, whose counterfeiting is wished to be avoided.

The inventors have surprisingly found that at least three specific inks, each constituted by at least one active material detectable by Raman in the region comprised in the range from 1500 to 2500 cm⁻¹, in combination with at least one polymer as a carrier, not detectable in the same range, when deposited in at least two distinct zones of the surface of a polymeric support in a specific sequence, offer the possibility of obtaining an adaptable and unique identification code for each individual good to be authenticated, i.e. a specific easily obtainable anti-counterfeiting label, flexible in use, capable of being detectable through the Raman technique, even in portable form, and representing a unique medium of identification, adapted to prevent the counterfeiting replication of any type of goods. More in detail, through a specific arrangement of m inks to form a code in n distinct zones of the surface of a polymeric support it is possible to obtain mⁿ possibilities of combinations of inks, i.e. mⁿ possible identification codes, i.e. mⁿ different labels. Each ink is associated with a number and, based on the arrangement of the deposition zones on the surface of the polymeric support and on the sequence of the inks in the label, it is possible to obtain a single numerical code, which therefore distinguishes each individual label.

It is thus possible to obtain a very complex "label", and therefore very difficult to counterfeit, which uniquely identifies the product to which it is applied, certifying its authenticity, by using a few individual inks, which can be used both individually and in simple combination.

The inventors, therefore, have surprisingly found that the combination of the use of a specific combination of at least three inks each containing at least two active materials detectable in a specific Raman region, and the specific presence of at least two distinct deposition zones on the surface of the polymeric support, allows on the one hand the use of a lower amount of detectable active materials within the inks, and on the other hand a detection that is simple, without interferences and difficult to copy.

In the first aspect thereof the invention concerns an anti-counterfeiting label comprising:
A) a polymeric support, possibly filled with materials in the form of fibres;
B) at least three inks deposited on the polymeric support according to a defined deposition sequence; and
C) at least one transparent polymeric layer that covers said at least three inks; wherein each ink comprises:
   (i) at least one active material detectable by Raman, in the region in the range from 1500 to 2500 cm⁻¹ with source in the visible range, having a concentration in the range from 10⁻⁵ to 10⁻¹ M, and
   (ii) at least one polymeric carrier;

wherein at least two of said at least three inks are different from each other;
wherein said at least three inks are deposited, the one independently of the other, in at least two distinct zones of the surface of the polymeric support A); and
wherein said deposition sequence of said at least three inks in said at least two distinct zones of the surface of the polymeric support defines a numerical code.

The polymeric support of the anti-counterfeiting label of the invention is made with a polymer selected from the group consisting of polycarbonate (PC), polylactic acid (PLA), polyamide (PA), thermoplastic polyurethane (TPU), polyethylene (PE), cellulose, polyvinyl chloride (PVC), compostable food film, butadiene-styrene polymer, acetonitrile butadiene styrene (ABS), polycarbonate/acetonitrile butadiene styrene (PC/ABS), polybutadiene terephthalate (PBT), polycarbonate/polybutadiene terephthalate (PC/PBT), ethylene vinyl acetate (EVA), polyethylene terephthalate (PET) and mixtures thereof. Said polymeric support can therefore be selected based on the needs of use of the final label and on the printing conditions.

In a first preferred embodiment, when the polymeric support is made of compostable food film, said compostable food film is ECORALENE BB/951.

If it is wished to increase the mechanical strength of the label, the polymeric material of the support can be filled with fibres, for example with glass or carbon fibres.

In a second preferred embodiment, when the polymeric support is made of cellulose, it may be selected from the group consisting of: paper having a grammage in a range from 80 to 150 g/m², cardboard having a grammage in a range from 600 to 1100 g/m², wood, fabric fibres having a weight in a range from 160 to 220 g/m² and fabric fibres having a weight in a range from 300 to 500 g/m².

The polymeric support can be rigid or flexible, as a function of the polymer used for its production and of the possible presence of fibres for loading the polymeric matrix; preferably said polymeric support is flexible, in order to be able to be deposited on an original rigid or flexible item.

Said polymeric support can be in 2D or 3D form. In the case of a two-dimensional (or essentially two-dimensional) polymeric support, the at least two distinct deposition zones of the inks are simply distinct zones of the surface of the support. In the case of a three-dimensional polymeric support, the at least two distinct deposition zones of the inks may simply be areas on the surface, but they are preferably constituted by cavities or depressions on said surface, which allow a more immediate localization of the deposition zones themselves even in the case of uncoloured inks, and the use of greater amounts of ink to have a more intense Raman signal and therefore of easier and immediate detectability. In this description and in the claims, unless otherwise specified, "deposition zone" means both an area on the surface of the support at the same level as the rest of said surface, and an area that constitutes a depression or a cavity with respect to said surface.

When the polymeric support is made of paper, said support is essentially two-dimensional and may have a thickness in a range from 70 to 180 microns.

In the case of a 3D polymeric support with cavities, this is preferably made of plastic, and can be obtained starting from prefabricated plates/sheets of about 1 mm thickness, subsequently subjected to mechanical/laser processing in order to obtain the desired number of cavities, for example by lamination and milling; alternatively, said support with cavities can be produced by exploiting 3D printing processes.

Preferred materials for the realization of these 3D supports starting from preformed sheets are polycarbonate (PC) and polyamides, the latter being preferred when high chemical and mechanical performances are required of the label. In the case of production of the polymeric support by 3D printing, it preferably has a thickness lower than or equal to 3 mm. Shape and size of the label depend on the space available on the item the originality of which is to be guaranteed, and typically the label has a square or rectangular geometry with sides with dimensions comprised between 1 and 10 cm, commonly between 2 and 5 cm, and more commonly between 3 and 4 cm.

Preferred materials for the realization of the polymeric support by 3D printing are PC, in particular the Raise3D Premium PC product of the company CREA3D^{®} from Bari (Italy), and the FILOFlex, BioFlex and Elix ABS-3D FB products produced and sold by the company FILOALFA^{®} from Turin (Italy). The FILOFlex product is a flexible filament based on thermoplastic polyurethane (TPU) with the ability to adhere to many materials from polymers to metals to paints, such as for example ABS, PC/ABS, PC, PBT, PC/PBT, EVA and other TPU; the BioFlex filament, based on PLA biopolymer, is instead characterized by excellent flexibility and provided with medical certification type USP XXXII: 2009 Class VI and ISO 10993 - 4/5/10; finally, the Elix ABS-3D FB filament, a filament based on natural copolyester, is characterized by a high bio-compatibility according to standard ISO 10993-1 USP Class VI, and provided with food contact compatibility certification EU No. 10/20111 and 21 CRF FDA. 3D printing of the polymeric support can advantageously be done via QIDI X-Plus 3D printer, by creating the model of the substrate on the Autodesk Fusion 360 software and by setting the printing parameters using the QIDI Print slicer software.

The support is characterized by a different mechanical strength and an elasticity depending on the polymer used. For example, when a polymeric support made with the Raise3D Premium PC material is used, it has a Young's modulus value, measured by ASTM D638 (ISO 527, GB/T 1040), of 2307 ± 60 (MPa), a tensile strength value, measured by ASTM D638 (ISO 527, GB/T 1040), of 62.7 ± 1.3 (MPa), an elongation at break value, measured by ASTM D638 (ISO 527, GB/T 1040), of 3.2 ± 0.4 (%), a bending modulus value, measured by ASTM D790 (ISO 178, GB/T 9341), of 2477 ± 159 (MPa), a bending strength value, measured by ASTM D790 (ISO 178, GB/T 9341), of 100.4 ± 2.7 (MPa) and a Charpy impact force value, measured by ASTM D256 (ISO 179, GB/T 1043), of 3.4 ± 0.1 (kJ/m²).

Said polymeric support has at least two distinct deposition zones.

Preferably, said at least two distinct deposition zones are in a numerical range from 2 to 40, preferably from 10 to 35, more preferably they are 30.

The number of the distinct deposition zones is variable based on the needs of security and of reading/verification speed, and depends on the degree of security required of the goods to be protected by means of the anti-counterfeiting label of the invention.

In the label of the invention the number of distinct deposition zones and of inks used, allowing to have mⁿ combinations, gives the possibility of guaranteeing the uniqueness for an ideally infinite number of products to be protected, when the value of mⁿ is greater than or equal to the number of products to be protected.

Advantageously, when the number of the distinct deposition zones is lower than 40 there is no need for an increase of the dimensions of the support and therefore of the final anti-counterfeiting label. Furthermore, when the number of the distinct deposition zones is lower than 40, the acquisition time of the spectra for the verification of the label is always lower than one minute, thus ensuring a rapid and precise detection.

In an advantageous form of the invention, said at least two distinct deposition zones have substantially circular geometry.

Preferably, said distinct deposition zones of substantially circular geometry have a diameter comprised between 20 µm and 5 mm, more preferably from 50 µm to 3 mm, even more preferably from 800 µm to 1.5 mm.

These specific dimensions ensure, on the one hand, that the laser of the source of the Raman spectrometer for the recognition of the label and therefore for the authentication of the original item to be protected, can be easily centred within the single deposition zone and therefore easily receive a clear signal only from the specific deposition zone, on the other hand, that the single deposition zone can accommodate a reduced content of active material, thus avoiding waste of material, while allowing a good detection.

Advantageously, said at least two distinct deposition zones have a spacing between one another in the range from 20 µm to 5 mm, more preferably from 50 µm to 3 mm, even more preferably from 800 µm to 1.5 mm.

When the number of said at least two distinct deposition zones is lower than 5, said spacing may reach 10 cm.

Therefore, advantageously, by keeping the spacing of the cavities in the specific ranges described above, on the one hand it is possible to keep the dimensions of the anti-counterfeiting label of the invention contained, thus allowing the protection of even very small goods, on the other hand it is possible to acquire an easy and clear signal from the single deposition zone, avoiding Raman signal interferences with the active materials contained in the neighbouring distinct deposition zones.

In fact, both the amplitude of the at least two distinct deposition zones and their spacing in the polymeric support allow to reduce on the one hand the excessive use of plastic materials for the support, on the other hand the excessive concentration of active materials and polymeric carriers in the inks, while not affecting the high quality and precise detection of the signal of the active materials within the inks and therefore the easy recognition of the anti-counterfeiting label.

In a preferred and advantageous embodiment of the invention, when the original item to be protected is small in size, it is also possible to produce miniaturized labels; for example, it is possible to produce a label with 30 distinct deposition zones, having total dimensions that can be 220 x 260 microns, considering a diameter per single deposition zone of 20 micrometres and spacing of 20 micrometres, or 550 x 650 microns, considering a diameter per single deposition zone of 50 micrometres and spacing of 50 micrometres.

As indicated above, the anti-counterfeiting label comprises at least three inks, wherein each ink comprises: (i) at least one active material detectable by Raman in the region in the range from 1500 to 2500 cm⁻¹ with source in the visible range, said material having a concentration in the range from 10⁻⁵ to 10⁻¹ M, and (ii) at least one polymeric carrier, wherein at least two of said at least three inks are different from each other and are positioned, the one independently of the other in said at least two distinct deposition zones of the polymeric support A).

Preferably, said active material detectable by Raman is active in the region comprised in the range from 1800 to 2300 cm⁻¹; more preferably said active material detectable by Raman is selected from the group consisting of (in some cases, together with the name of the compound in brackets, there are reported the abbreviations with which this is commonly indicated; in case of discrepancy between the name of a compound and the formula reported, the latter must be considered as the correct one):

| **Structure** | **Name of the compound** |
|---|---|
| 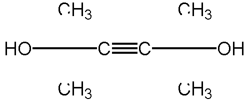 | 2,5-dimethyl-3-hexyne-2,5-diol |
| 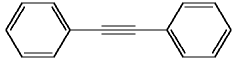 | 1,2-diphenylacetylene (DPA) |
| 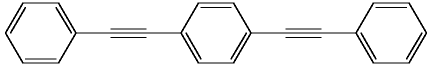 | 1,4-bis(2-phenylethynyl)benzene (BPB) |
| 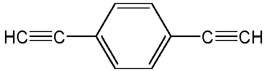 | 1,4-diethynylbenzene |
| 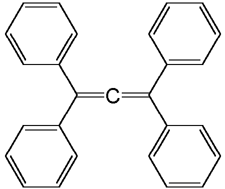 | 1,1,3,3-tetraphenylallene ([3]Ph) |
| 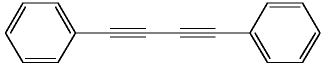 | 1,4-diphenylbutadiyne (DPB) |
| 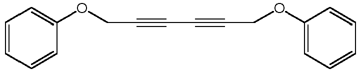 | 1,6-diphenoxy-2,4-hexadiyne (DH) |
| 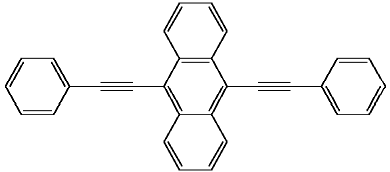 | 9,10-bis(phenylethynyl)anthracene |
| 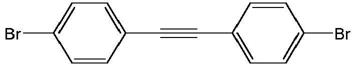 | Bis(4-bromophenyl)acetylene |
| 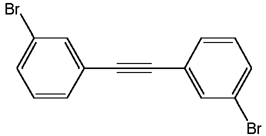 | Bis(3-bromophenyl)acetylene |
| 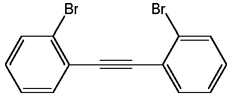 | Bis(2-bromophenyl)acetylene |
| 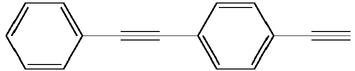 | 1-ethynyl-4-(phenylethynyl)benzene |
| 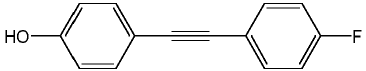 | 4-(4-fluorophenylethynyl)phenol |
| 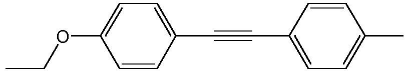 | 1-ethoxy-4-(p-tolylethynyl)benzene |
| 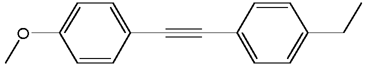 | 1-ethyl-4-[(4-methoxyphenyl)ethynyl] benzene |
| 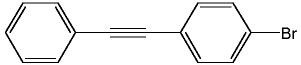 | 1-Bromo-4(phenylethynyl)benzene |
| 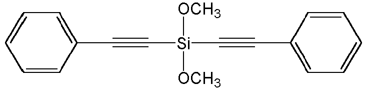 | dimethylbis(phenylethynyl)silane |
| 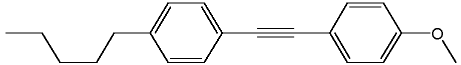 | 1-(4-methoxyphenyl)ethynyl-4-pentylbenzene |
| 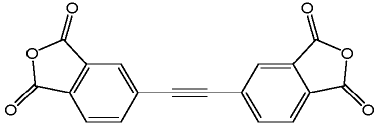 | 4,4'-(ethyne-1,2-diyl) diphthalic anhydride |
| 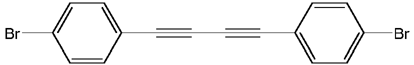 | 1,4-bis(4-bromophenyl)-1,3-butadiyne |
| 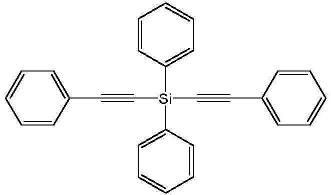 | Diphenylbis(phenylethynyl)silane |
| 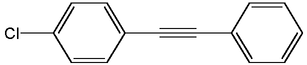 | 1-chloro-4-(phenylethynyl)benzene |
| 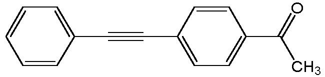 | 4'-(phenylethynyl)acetophenone |
| 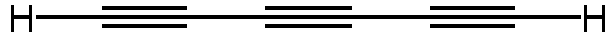 | hexa-1,3,5-triyne |
| 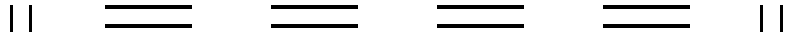 | octa-1,3,5,7-tetrayne |
| 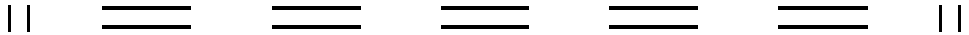 | deca-1,3,5,7,9-pentayne |

and their mixtures.

The compounds reported in the table are commercially available; in addition, the polyynes hexa-1,3,5-triyne, octa-1,3,5,7-tetrayne and deca-1,3,5,7,9-pentayne can be synthesized as a step of the production of the inks of the invention, with SADL and PLAL methods; these methods are well known to the person skilled in the art, for example from the article "Synthesis of polyynes in a submerged electric arc in organic solvents", F. Cataldo, Carbon, vol. 42, Issue 1, 2004, 129-142 in the case of SADL, and from the article "Formation of hydrogen-capped polyynes by laser ablation of graphite particles suspended in solution", M. Tsuji et al., Chemical physics letters 355, issues 1-2 (2002): 101-108, in the case of PLAL.

Even more preferably said at least one active material of said each ink is selected from the group consisting of: 1,4-diethynylbenzene, 2,5-dimethyl-3-hexyne-2,5-diol, 1,2-diphenylacetylene (DPA), 1,1,3,3-tetraphenylallene ([3]Ph), 1,4-diphenylbutadiyne (DPB), 1,6-diphenoxy-2,4-hexadiyne (DH) and their mixtures.

More preferably, said at least one active material detectable by Raman in the region comprised in the range from 1500 to 2500 cm⁻¹, when irradiated by a monochromatic light source in the visible range having wavelength in the range from 380 to 780 nm, preferably of 532 nm, emits in the region of the visible range or of the NIR, from 403 to 969 nm, preferably emits in the range from 578 to 614 nm; within these ranges, the wavelength of the radiation emitted by the active materials is higher than that of the incident monochromatic radiation.

In addition to one or more of the active materials described above, the ink of the invention comprises at least one polymeric carrier which is intended to act as a stabilizing and homogenizing matrix.

Preferably, the at least one polymeric carrier composing the ink in combination with at least one active material, is selected from the group consisting of: polycarbonate (PC), polylactic acid (PLA), polyamide (PA), thermoplastic polyurethane (TPU), polyethylene (PE), cellulose, polyvinyl chloride (PVC), compostable food film, butadiene-styrene polymer, acetonitrile butadiene styrene (ABS), polycarbonate/acetonitrile butadiene styrene (PC/ABS), polybutadiene terephthalate (PBT), polycarbonate/polybutadiene terephthalate (PC/PBT), ethylene vinyl acetate (EVA), polyethylene terephthalate (PET), inorganic materials, polymethylmethacrylate (PMMA), polyvinyl alcohol (PVA), polyethylene oxide (PEO) and their mixtures, preferably it is polycarbonate (PC).

More preferably, said at least one polymeric carrier is polycarbonate (PC).

The polymeric carrier has the function of stabilizing and preserving the at least one active material within the at least three inks of the label of the invention. Through bonds and chemical interactions, said carrier is in fact able to contribute to stabilizing the air-unstable active materials and preventing their deterioration and oxidation, which would modify their chemical structure, making them no longer detectable by Raman in the region of interest.

Advantageously, said polymeric carrier is in the form of a solution, therefore, said polymeric carrier is in admixture with at least one solvent, so as to obtain a polymeric solution.

Said at least one solvent ensures a good solubility of both the active material and of the polymer.

Preferably, said at least one solvent is selected from the group consisting of: water, ethanol, isopropanol, methanol, acetonitrile, acetic acid, decalin, dichloromethane, dibromomethane, trifluoroacetic acid, 1,3-dioxolane (DXL), cyclohexane, acetone, dimethylsulfoxide (DMSO), tetrahydrofuran (THF), ethyl acetate, methyl ethyl ketone (MEK), N,N-dimethylformamide (DMF), amyl alcohol, ethanolamine, toluene, formic acid and their mixtures. More preferably, said solvent is 1,3-dioxolane (DXL). Advantageously, the at least one polymeric carrier has a concentration comprised in a range from 1 to 20% by weight with respect to the total of the polymeric solution. The specific chemical nature of the at least three inks of the invention, each comprising at least one active material, results in the possibility that they are detectable in a precise region of the Raman spectrum comprised in the range from 1500 to 2500 cm⁻¹ with source in the visible range.

This region is located in an area of the spectrum where most of the other materials (biological materials, polymers, paper, metals etc.) are inactive. This makes the at least one active material contained in the at least three inks easily distinguishable from other substances and guarantees the absence of interferences and therefore simplifies the detection of the presence (or not) of the label on the goods to be analysed.

Furthermore, again the specific chemical nature of the at least three inks of the invention, comprising at least one active material detectable by Raman, makes it possible to use of said at least one active material up to a concentration of 10⁻⁵ M. This entails that the at least one active material present in the at least three inks is very difficult to isolate for characterizations aimed at understanding the type of molecule and therefore replicating the label for counterfeiting purposes.

Preferably, the at least one active material detectable by Raman of said each ink is in a concentration in the range from 10⁻⁵ M to 10⁻¹ M, preferably from 2 x 10⁻⁴ M to 2 x 10⁻² M, still more preferably from 8 x 10⁻⁴ M to 2 x 10⁻³ M.

Finally, the at least one active material within the at least three inks of the invention, if it also were extracted from the anti-counterfeiting support of the label of the invention and subsequently isolated from the polymeric carrier of the inks, would not be employable nor copiable, since, being a highly air-unstable molecule, it would rapidly degrade once separated firstly from the transparent polymeric layer of the label and secondly from the polymeric stabilizing carrier of the ink.

Therefore, the compounds listed above ensure that they are hardly recognizable and therefore reproducible by a third party, who wanted to replicate the anti-counterfeiting label of the invention, since they are easily and quickly degradable during any attempts to tamper with the anti-counterfeiting label itself.

Advantageously, said at least one active material detectable by Raman in the region comprised in the range from 1500 to 2500 cm⁻¹ generates a detectable Raman spectrum, thus forming a security mark readable by a Raman instrument on the original item.

At least two of the at least three inks, each comprising at least one active material detectable by Raman, of the anti-counterfeiting label of the invention are different from each other.

In one embodiment, when the active materials within the inks are 2 (A, B), it is possible to obtain 3 inks: 1) A; 2) B; and 3) A+B.

Preferably, when the active materials within the inks are A) 1,4-diethynylbenzene (C₁₀H₆), B) 2,5-dimethyl-3-hexyne-2,5-diol (C₈H₁₄O₂) it is therefore possible to obtain 3 different inks:
1) 1,4-diethynylbenzene (C₁₀H₆); 2) 2,5-dimethyl-3-hexyne-2,5-diol (C₈H₁₄O₂), and 3) 1,4-diethynylbenzene (C₁₀H₆) + 2,5-dimethyl-3-hexyne-2,5-diol (C₈H₁₄O₂).

Another example of three inks obtainable with two active materials is that obtainable with the pair of materials hexa-1,3,5-triyne (C₆H₂) and octa-1,3,5,7-tetrayne (C₈H₂); in this case the three different inks contain the following materials: 1) C₆H₂; 2) C₆H₂; 3) C₆H₂ + C₈H₂.

In a preferred embodiment, when the active materials within the inks are 3 (A, B, C), it is possible to obtain 7 inks:
1) A; 2) B; 3) C; 4) A+B; 5) A+C; 6) B+C; 7) A+B+C.

Preferably when the active materials within the inks are A) 1,4-diethynylbenzene (C₁₀H₆), B) 2,5-dimethyl-3-hexyne-2,5-diol (C₈H₁₄O₂) and C) (1,2-diphenylacetylene) (C₁₄H₁₀) it is therefore possible to obtain 7 different inks:
1) 1,4-diethynylbenzene (C₁₀H₆); 2) 2,5-dimethyl-3-hexyne-2,5-diol (C₈H₁₄O₂), 3) 1,2-diphenylacetylene (C₁₄H₁₀); 4) 1,4-diethynylbenzene (C₁₀H₆) + 2,5-dimethyl-3-hexyne-2,5-diol (C₈H₁₄O₂); 5) 1,4-diethynylbenzene (C₁₀H₆) + 1,2-diphenylacetylene (C₁₄H₁₀); 6) 2,5-dimethyl-3-hexyne-2,5-diol (C₈H₁₄O₂) + (1,2-diphenylacetylene) (C₁₄H₁₀); 7) 1,4-diethylbenzene (C₁₀H₆) + 2,5-dimethyl-3-hexyne-2,5-diol (C₈H₁₄O₂) + 1,2-diphenylacetylene (C₁₄H₁₀).

Still, when the active materials within the inks are A) C₆H₂, B) C₈H₂ and C) C₁₀H₂ it is therefore possible to obtain 7 different inks:
1) C₆H₂; 2) C₆H₂; 3) C₁₀H₂; 4) C₆H₂ + C₆H₂; 5) C₆H₂ + C₁₀H₂; 6) C₈H₂ + C₁₀H₂; 7) C₆H₂ + C₈H₂ + C₁₀H₂.

The possibility of creating a code that uniquely identifies the product thanks to the presence of distinct deposition zones in which the active material is present makes it possible to obtain a product that is difficult to counterfeit. In fact, as will be evident from the experimental part, it is possible to have a virtually infinite number of codes, depending on the number of active materials used individually or in different combinations in each single ink, and deposited in a variable number of distinct deposition zones of the polymeric support of the label.

In a first embodiment, considering 2 active materials, used individually or in combination in 3 different inks and deposited in 2 different distinct deposition zones on a polymeric support, it is possible to obtain 9 possible combinations or codes for the anti-counterfeiting label.

In a second embodiment, considering 3 active materials, used individually or in combination in 7 different inks and deposited in 6 different distinct deposition zones on a polymeric support, it is possible to obtain 120000 possible combinations or codes for the anti-counterfeiting label.

In an advantageous and preferred embodiment, considering 3 active materials, used individually or in combination in 7 different inks and deposited in 30 different distinct deposition zones on a polymeric support, it is possible to obtain up to 10²⁵ possible combinations.

Given the very high number of possible combinations, and therefore of possible counterfeiting labels, it is possible in principle to assign an identification code to each individual item whose authenticity is to be ascertained; alternatively, it is possible to use an identical code for all the items belonging to a production batch (obviously by applying one of these identical labels to each individual item) or even for all the items corresponding to the same model of a product (for example, all the garments of the same series).

The specific sequence or "code" of deposition of the inks in the distinct deposition zones of the polymeric support of the label is then translated into a numerical code, which uniquely identifies the product to which it has been applied.

The anti-counterfeiting label of the invention further comprises a transparent polymeric layer, adapted to protect the underlying distinct deposition zones.

On the surface of the support, it protects the inks deposited in the underlying distinct deposition zones; this layer therefore acts as a protective film for the underlying inks and, at the same time, does not prevent the acquisition of the Raman signals, ensuring the correct decryption of the code. In case of removal of said transparent polymeric layer, in an attempt to counterfeit the label, the inks are directly exposed to the air leading to an accelerated degradation of the active material. This induces a change in the signal of the active material indicating its tampering, resulting in a further advantage over the marking devices of the prior art.

Preferably the at least one transparent polymeric layer is made of a polymer selected from the group consisting of: polyvinylchloride (PVC), polycarbonate (PC), polyethylene (PE), polypropylene (PP), polymethylmethacrylate (PMMA), polyethylene terephthalate (PET), polystyrene (PS); preferably polycarbonate (PC) is employed.

When the at least one transparent polymeric layer is made of polyvinylchloride (PVC), it is preferably an adhesive PVC and is therefore simply applied on the surface of the anti-counterfeiting label of the invention.

When the at least one transparent polymeric layer is made of polycarbonate, it is glued with a solvent. Preferably said solvent is 1,3-dioxolane (DXL), which allows to partially dissolve the PC sheet.

Advantageously, the at least one transparent polymeric layer has a thickness comprised in a range from 100 µm to 2 mm, preferably from 500 µm to 1.5 mm, more preferably of 1 mm.

Thanks to the presence of active material detectable by Raman in the specific region of the spectrum where most of the other materials are inactive (biological materials, polymers, paper, metals, etc.), deposited in at least two distinct zones of the surface of the polymeric support in the form of at least three inks of which at least two are different from each other, the anti-counterfeiting label of the invention allows a very short reading time for the verification of the anti-counterfeiting code, even lower than a minute and allows a precise and interference-free reading of the Raman signal of the individual identifying active materials. In addition, thanks to the possibility of using a concentration of up to 10⁻⁵ M of the active materials inside the individual inks, they are very difficult to isolate from the polymeric carrier for characterizations aimed at understanding the chemical nature of the molecule of the active material ("reverse engineering") and therefore at replicating the label for counterfeiting purposes.

Furthermore, since the active materials are within the polymeric matrix inks, also by means of an EDX analysis of the aforementioned inks, only carbon would be detected as the main component, since it is present in a high concentration in the active materials, in the polymeric carrier of the inks, and in the polymeric support itself and in the protective layer of the label of the invention, hence not giving any real indication on the true composition of the aforementioned inks.

In a second aspect thereof, the invention concerns the preparation of an ink to be deposited in the individual distinct deposition zones of the polymeric support of the anti-counterfeiting label.

The preparation of the ink of the invention comprises the steps of:
a) mixing at least one polymeric carrier selected from the group consisting of polycarbonate (PC), polylactic acid (PLA), polyamide (PA), thermoplastic polyurethane (TPU), polyethylene (PE), cellulose, polyvinylchloride (PVC), compostable food film, butadiene-styrene, acetonitrile-butadiene-styrene (ABS), polycarbonate/acetonitrile-butadiene-styrene (PC/ABS), polybutadiene terephthalate (PBT), polycarbonate/polybutadiene terephthalate (PC/PBT), ethylene vinyl acetate (EVA), polyethylene terephthalate (PET), inorganic materials, polymethylmethacrylate (PMMA), polyvinyl alcohol (PVA), polyethylene oxide (PEO) and their mixtures, with at least one solvent selected from the group consisting of water, methanol, ethanol, isopropanol, acetonitrile, acetic acid, trifluoroacetic acid, decalin, dichloromethane, dibromomethane, 1,3-dioxolane (DXL), cyclohexane, acetone, dimethylsulfoxide, tetrahydrofuran, ethyl acetate, methyl ethyl ketone, N,N-dimethylformamide, amyl alcohol, ethanolamine, toluene, formic acid and their mixtures, so as to obtain a polymeric solution;
b) solubilizing at least one active material detectable by Raman in the region in the range from 1500 to 2500 cm⁻¹ with source in the visible range in the polymeric solution of step a) so as to obtain an ink;

wherein the polymeric solution of step a) has a concentration of the at least one polymeric carrier comprised in a range from 1 to 20% by weight; and
wherein the ink of step b) has a concentration of the at least one active material comprised in a range from 10⁻⁵ to 10⁻¹ M; and
wherein the ink of step b) has a viscosity at 25 °C comprised in a range from 2 to 20 cP when measured by means of an Anton Paar MCR 502 rheometer with a parallel plates measuring system.

The advantages of the concentration range of the at least one active material within the ink and of the final viscosity range of said ink are the same as those set out above for the anti-counterfeiting label of the invention.

In an advantageous embodiment, the method of the invention comprises a further step a') of providing silver nanoparticles and mixing them with the polymeric solution of step a) in a 1:4 ratio by weight so as to obtain a suspension of silver particles in polymeric solution. Suspensions of silver nanoparticles are commercially available; alternatively, the silver nanoparticles for use in the present invention can be produced according to the method described in the article "Adsorption and Surface-Enhanced Raman of dyes on silver and gold sols", P.C. Lee and D. Meisel, Journal of Physical Chemistry, 86 (1982) 3391-3395 (method known as "Lee-Meisel synthesis").

This step a') allows to detect active materials within the inks of the invention at further lower concentrations up to 10⁻⁹ M, since they intensify the signal detectable by Raman in the range from 1500 to 2500 cm⁻¹ with source in the visible range.

As will be evident from the experimental part, the synthesis adopted herein allows to obtain mixtures of active materials with different chain length, subsequently separable by liquid chromatography (HPLC) depending on the chain length and on the terminations.

In a third aspect thereof, the invention concerns a method for preparing the anti-counterfeiting label of the invention, comprising the steps of:
c) providing a polymeric support;
d) providing at least three inks prepared according to steps a) and b) described above, provided that at least two of said at least three inks are different from each other;
e) assigning an identification number to each ink;
f) depositing according to a defined deposition sequence each of the at least three inks, of which at least two different, in at least two distinct zones of the surface of the polymeric support through a technique selected from the group consisting of spin coating, drop casting, inkjet printing, bar coating or drop casting, in a defined deposition sequence;
g) depositing at least one transparent polymeric layer above the polymeric support so as to cover said at least two distinct zones of its surface;
h) obtaining a numerical code from the deposition sequence of said at least three inks in said at least two distinct zones of the surface of the polymeric support, each identified with an identification number assigned in step e), obtaining an anti-counterfeiting label identified through the numerical code of step h).

The method of the invention comprises a step c) of providing at least one polymeric support having the characteristics described above in relation to the first aspect of the invention.

The individual inks are deposited on the surface of the polymeric support or in depressions or cavities present on said surface, according to a specific sequence or "code", through a technique selected from the group consisting of spin coating, drop casting, inkjet printing, bar coating or drop casting of step f).

Preferably, the deposition of step f) takes place by inkjet printing or drop casting, more preferably drop casting.

The precise viscosity value of the ink of the invention can be varied depending on the deposition technique used in step f), and when falling within the range from 2 to 20 cP measured as indicated above, it can be easily deposited with the techniques listed above in the single deposition zone with the precision required to obtain a single deposition zone in which are present one or more inks in a mixture, distinct from those contained individually or in a mixture in the neighbouring deposition zones.

This avoids signal overlaps that would thus create interferences, thus compromising the precise measurement by Raman and therefore the certain identification of the label.

Thus, the viscosity range advantageously ensures a fast deposition, while allowing a precise and interference-free detection of the at least one active material comprised in the at least three inks deposited in the at least two deposition zones. The volume of the ink of the invention to be deposited in step f) is dependent on the type of active material detectable by Raman and on the intensity of the Raman signal associated with said active material.

Advantageously, the total volume of ink deposited in each deposition zone is comprised in a range from 1 to 1000 microlitres, preferably from 5 to 100 microlitres, more preferably it is 10 microlitres.

In the case of a deposition by means of inkjet printer, the total volume of ink deposited in the deposition zones is comprised in a range from 1000 picolitres to 10 microlitres.

This allows to obtain an anti-counterfeiting label with little waste of material, a few microlitres of compounds and inks are in fact used for each deposition zone, maintaining its efficiency and compactness.

The method of the invention comprises a step g) of depositing at least one transparent polymeric layer.

Said transparent polymeric layer is adapted to protect the ink deposits from exposure to air and therefore to oxygen, which would cause the oxidation of the at least two active materials within the individual at least three underlying inks.

Preferably, the at least one transparent polymeric layer of step g) is made of a polymer selected from the group consisting of: polyvinylchloride (PVC), polycarbonate (PC), polyethylene (PE), polypropylene (PP), polymethylmethacrylate (PMMA), polyethylene terephthalate (PET), polystyrene (PS).

When the at least one transparent polymeric layer is made of polyvinylchloride (PVC), it is preferably an adhesive PVC and is therefore simply applied on the surface of the anti-counterfeiting label of the invention.

When the at least one transparent polymeric layer is made of polycarbonate (PC), it is glued with a solvent, preferably dioxolane (DXL), which allows to partially dissolve the PC sheet. The solvent is applied on the perimeter of the upper face of the label and on the perimeter of the lower surface of the PC sheet which will be used as a protective layer. Once both surfaces are wet, the two parts are brought into contact and a manual pressure is applied by means of a constant 5-kg weight during the drying step, thus allowing to obtain after 24 hours an extremely effective adhesion firmly gluing the protective layer to the support of the label.

In a final aspect thereof, the invention concerns a method for determining the authenticity of an item provided with a security code comprising the steps of:
i) providing at least one anti-counterfeiting label of the invention;
l) applying said at least one anti-counterfeiting label of step i) to an original item;
m) irradiating said at least one anti-counterfeiting label with a monochromatic light source with wavelength in the field of the visible range;
n) obtaining spectral data, in the form of Raman spectrum by means of Raman Spectroscopy or SERS (Surface Enhanced Raman Spectroscopy), in the region from 1500 to 2500 cm⁻¹, from the light diffused by the anti-counterfeiting label following irradiation of step m);
o) comparing the spectral data obtained in step n) with reference data, to uniquely indicate the authenticity of said item,
wherein the irradiation of step m) and the obtaining of the spectral data are performed according to a predefined sequence on the inks in the anti-counterfeiting label of the invention, and such as to generate a unique code for the label.

In step n), the spectral data obtained may be in the form of data relating to positions of peaks or of bands of the emission spectrum of the ink.

The inventors have surprisingly found that, by using the anti-counterfeiting label of the invention, the at least two active material detectable by Raman contained in the at least three inks deposited in the at least two distinct deposition zones on the polymeric support are easily detectable and effectively identifiable by means of a Raman source in the visible range, thus obviating the problems of the known use of Raman sources in the field of the near IR (NIR) range. In addition, the combination of the specific choice of the at least one active material and of the source in the visible range that increases the excitation efficiency of the single ink and allows the use of low concentrations of said at least one detectable active material, in the range from 10⁻⁵ to 10⁻¹ M.

The duration of the Raman detection, in step n) of the method of the invention, depends on the number of distinct deposition zones present on the anti-counterfeiting support of the label provided in step i).

In a preferred and advantageous form of the method of the invention, when it comprises a number of distinct deposition zones up to 40, with the relative inks, step n) of detection of the spectral data by Raman provides for acquisition times per single deposition zone that are comprised in a range ranging from 0.1 to 1 second per deposition zone and, also taking into account the openings and closures of the shutters of the Raman spectrometer used in the measurement and the movement time of the sample, the total reading time for the verification of the anti-counterfeiting code is comprised in a range from 34 to 60 seconds, thus never exceeding one minute.

The possibility of creating a code that uniquely identifies the product thanks to the presence of a deposition zone in which the active material (or the active materials) is present makes it possible to obtain a product that is difficult to counterfeit. In fact, as demonstrated by the examples in the experimental part below, one can have a virtually infinite number of codes only by considering 3 active materials combined to form 7 inks deposited in 30 cavities.

Furthermore, the active materials present within the inks are linear molecules of sp hybridized carbon chains and are employed in such quantities as to make their extraction from the polymeric matrix extremely difficult. If one were able to isolate them, they would degrade very quickly because unstable to air.

In this way the invention provides an alternative to the traditional anti-counterfeiting labels, which allows multiple levels of information to be integrated on the same label based on the reading sequence and on the reading depth. Furthermore, since the label is flexible, it is possible to vary the shape and the dimensions of the deposition zones in the label itself or even from label to label and the arrangement of the deposition zones in the label.

The invention will be further described in the following experimental part, to be understood for illustrative and non-limiting purposes, which reports examples of preparation of the anti-counterfeiting label of the invention, and its mechanical strength tests.

### EXPERIMENTAL PART

### Materials and Methods

KERN ABJ-NM/ABS-N microbalance maximum capacity 120 g division 0.1 mg reproducibility 0.2 mg to weigh the polymer granules and active material, magnetic heating plate with yellow line MST basic steel plate, temperature range 20-310 °C, maximum speed 1250 rpm, provided with probe for electronic temperature regulation to dissolve the polymer granules and active material inside the solvent.

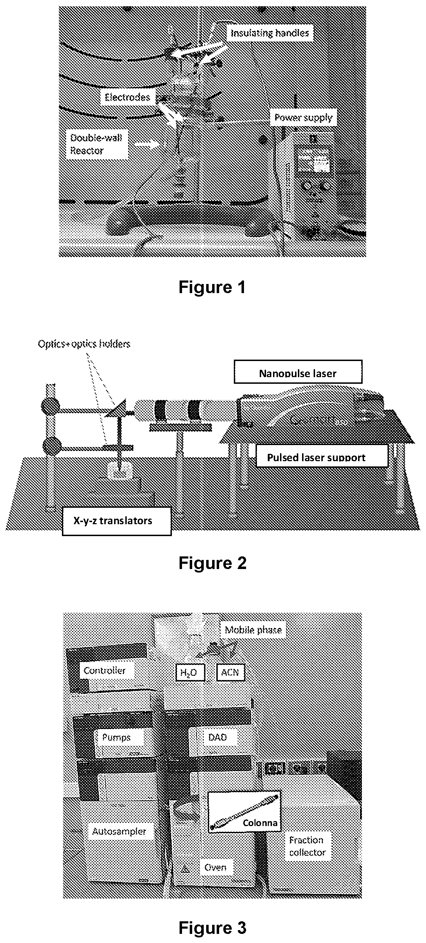

Set up of submerged arc discharge in liquid (SADL), as depicted in Figure 1, to produce the active material on site constituted by: electrodes based on carbon (e.g., graphite) to be immersed in the solvent, a power supply to which the electrodes can be connected through appropriate electrical cables and a double-walled reactor capable of flushing tap water for cooling.

Set up of laser ablation in liquid (PLAL), as depicted in Figure 2, Q-smart 850 by Quantel, to produce the active material on site constituted by: Nd:YAG laser, 10 Hz, power from 0 to 850 mJ, and wavelength of 355 nm, 532 nm, 1064 nm, having an optical part composed of a mirror and a focusing lens, x, y, z movers and a beaker containing a target based on carbon (e.g. graphite) and a solvent.

HPLC Shimadzu Prominence High Performance Liquid Chromatography (HPLC), as depicted in Figure 3, with two types of chromatographic columns: 1) Shimadzu Shim-pack GIST C8 column (250 mm L. x 4.6 mm I.D., particles of 5 µm dimensions), 2) Phenomenex Luna 3 mm C18(2) 100 Å column, (150 x 4.6 mm), to separate the various types of active materials after their production depending on the length of the chain (sp carbon atoms) and the terminations, collecting them in tubes. Mobile phase based on water and acetonitrile. This HPLC instrument can be equipped with SIL-20A HT autosampler, a CTO-20A column furnace, an LC-20AD quaternary pump, an SPD-M20A photodiode UV-Vis spectrometer (DAD) and an FRC-10A fraction collector connected to a LabSolutions LC/GC software, to subsequently measure the number of carbon atoms of the active materials separated by HPLC.

A QIDI X-Plus 3D printer with different filaments was used, by creating the model of the substrate on the Autodesk Fusion 360 software and by setting the printing parameters using the QIDI Print slicer software.

Bench Raman (Renishaw inVia Raman microscope). The readings were carried out under different conditions (dark, light, plastic layer placed over the film). In all cases the acquisition time was comprised between 1-3 seconds (up to 50 ms in dark conditions). Several objectives were employed: 50x, 20x, with measurement acquisition time from 1 ms to 50 ms. An achromatic lens with a measurement acquisition time from 0.5 to 3 s was used. Spectra acquisitions were carried out with different laser powers, in the range from 7 to 70 mW, at a wavelength of 532 nm.

The Raman apparatus is composed of two diode-pumped solid-state lasers, one characterized by a λ equal to 532 nm and a maximum power of 70 mW and the other one has a λ equal to 660 nm and a maximum output power of 75 mW.

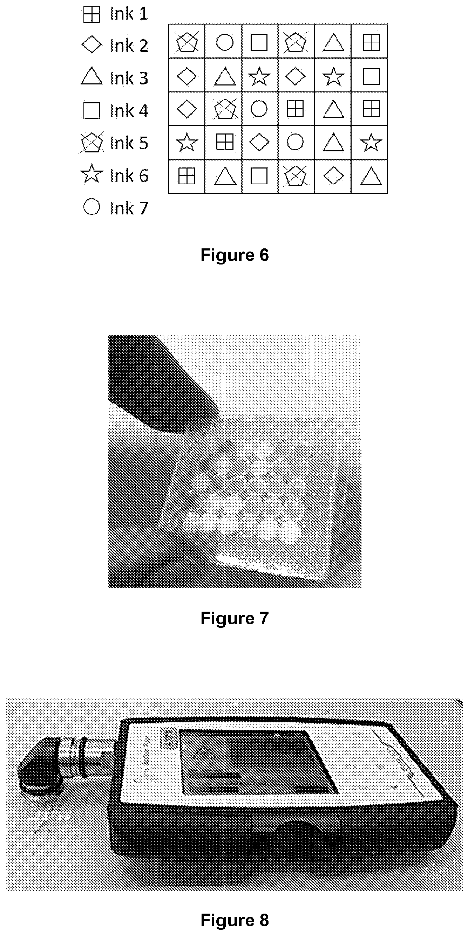

Portable Raman (Cora 100 by Anton-Paar), as depicted in Figure 8. The reading was carried out under different conditions (dark, light, plastic layer placed over the film). In all cases the acquisition time was comprised between 3-9 seconds. Spectra acquisitions were carried out with different laser powers, in the range from 70 to 215 mW, at a wavelength of 785 nm.

### Example 1 - Preparation of an ink of the invention

### 1.1 Preparation of polymeric solution

The polymers used as carriers and stabilisers in the preparation of the inks were selected on the basis of their solubility in a solvent compatible with that of the active material and also on the basis of their filmability.

A quantity of 1.178 g of polymeric carrier, in this case polycarbonate (PC), was weighed on an analytical balance and placed in a beaker provided with a magnetic stirrer. 10 ml of solvent, in this case dioxolane (DXL), were added to the polymeric carrier through a graduated cylinder. The solution was left under stirring at a speed comprised between 200 and 800 rpm, for a duration of at least one hour at ambient temperature, so as to obtain a polymeric solution of 10% wt. concentration.

Further polymeric solutions, synthesized according to the same method, are reported in Table 1.

**Table 1**

| **Polymer** | **Concentration (% by weight with respect to the total of the solution)** | **Solvent** |
|---|---|---|
| Polymethylmethacrylate (PMMA) | 11 to 18 | dimethylformamide (DMF) |
| Polymethylmethacrylate (PMMA) | 11 to 18 | acetone |
| Polymethylmethacrylate (PMMA) | 11 to 18 | Mixture of tetrahydrofuran (THF) and dimethylformamide THF:DMF from 1:1 to 3:1 v/v |
| Polymethylmethacrylate (PMMA) | 4 to 7.5 | dimethylformamide (DMF) |
| PDLLA (Poly(D,L-Lactic acid) | 18 to 23 | Mixture of tetrahydrofuran (THF) and dimethylformamide THF:DMF (2:1 v/v) |
| Polycarbonate (PC) | 5 to 15 | dioxolane (DXL) |
| Polyvinyl alcohol (PVA) | 0.5, 1, 3, 10 | Type I distilled water |

### 1.2 Synthesis of active materials by laser ablation in liquid (PLAL)

By means of the laser power of 50 mW, laser spot size of 2 mm, ablation time of 15 min, at the wavelength of 532 nm the following mixture of active materials was obtained in water: C₆H₂, C₈H₂, C₁₀H₂.

In the case of PLAL (Figure 2), it is possible to vary the following parameters:
- laser power (from 20-300 mW),
- laser spot size (from 0.1 mm to 9 mm),
- ablation time (from 1 min to 4 hours),
- wavelength (355 nm, 532 nm, 1064 nm), amount of solvent (from 1 ml to 10 ml),
so as to obtain the active materials dispersed in the respective solvents, as reported in Table 2. Depending on the solvent used, it is possible to obtain mixtures of different active materials.

**Table 2**

| **Solvents used** | **Active material obtained** |
|---|---|
| Ethanol | CₙH₂ (with n = 6 - 26), HCₙCH₃ (with n = 8-20) |
| Isopropanol | CₙH₂ (with n = 6 - 26), HCₙCH₃ (with n = 8-20) |
| Methanol | CₙH₂ (with n = 6 - 26), HCₙCH₃ (with n = 8-20) |
| Acetonitrile | CₙH₂ (with n = 6 - 26), HCₙCH₃ (with n = 8-20), HCₙCN (n = 6-18) |
| Acetic acid | CₙH₂ (with n = 6 - 26), HCₙCH₃ (with n = 8-20) |
| Decalin | CₙH₂ (with n = 6 - 26), HCₙCH₃ (with n = 8-20) |
| Dichloromethane | CₙH₂ (with n = 6 - 26), HCₙCH₃ (with n = 8-20), HCₙCl (with n = 8-20), ClCₙCl (with n = 8-16) |
| Dibromomethane | CₙH₂ (with n = 6 - 26), HCₙCH₃ (with n = 8-20), HCₙBr (with n = 8-18), BrCₙBr (with n = 8-12) |
| Trifluoroacetic acid | CₙH₂ (with n = 6 - 26), HCₙCH₃ (with n = 8-20), HCₙF (with n = 8-18), FCnF (with n = 8-12) |

Among the mentioned solvents, in addition to water, acetonitrile was found to be more efficient, more apolar, and therefore having greater stability during and after the listed synthesis of polyynes; besides it was also easily processable with HPLC and allows obtaining more varieties of length and termination of polyynes, such as for example double terminal hydrogen, terminal cyano group and terminal methyl.

### 1.3 Synthesis of active materials by arc discharge (SADL)

By means of the discharge time of 5 min, with 100 ml of solvent, a current intensity of 10 A and a voltage of the power supply of 20 V, the following mixture of active materials was obtained in water: C₆H₂, C₈H₂, C₁₀H₂.

In the case of SADL (Figure 1), it is possible to vary the following parameters:
- discharge time (from 5 to 40 min),
- amount of solvent (from 30 to 120 ml),
- current intensity (from 5 to 25 A) and
- voltage of the power supply (5V - 25V).
so as to obtain the active materials dispersed in the respective solvents, as reported in Table 3. Depending on the solvent used, it is possible to obtain mixtures of different active materials.

**Table 3**

| **Solvents used** | **Active material obtained** |
|---|---|
| Ethanol | CₙH₂ (with n = 6 - 26), HCₙCH₃ (with n = 8-20) |
| Isopropanol | CₙH₂ (with n = 6 - 26), HCₙCH₃ (with n = 8-20) |
| Methanol | CₙH₂ (with n = 6 - 26), HCₙCH₃ (with n = 8-20) |
| Acetonitrile | CₙH₂ (with n = 6 - 26), HCₙCH₃ (with n = 8-20), |
| | HCₙCN (n = 6-18) |
| Acetic acid | CₙH₂ (with n = 6 - 26), HCₙCH₃ (with n = 8-20) |
| Decalin | CₙH₂ (with n = 6 - 26), HCₙCH₃ (with n = 8-20) |
| Dichloromethane | CₙH₂ (with n = 6 - 26), HCₙCH₃ (with n = 8-20), HCₙCl (with n = 8-20), ClCₙCl (with n = 8-16) |
| Dibromomethane | CₙH₂ (with n = 6 - 26), HCₙCH₃ (with n = 8-20), HCₙBr (with n = 8-18), BrCₙBr (with n = 8-12) |
| Trifluoroacetic acid | CₙH₂ (with n = 6 - 26), HCₙCH₃ (with n = 8-20), HCₙF (with n = 8-18), FCnF (with n = 8-12) |

The solvents mentioned above were used in a concentration of 40% with respect to 60% of water, for reasons of flammability of the vapours and therefore of industrial applicability. Among the mentioned solvents, in addition to water, acetonitrile and isopropanol were found to be the most efficient, during and after the synthesis of the listed polyynes. The polyynes obtained above were then filtered through a 0.5 µm mesh filter.

### 1.4 Separation of the different active materials by liquid chromatography (HPLC)

The active materials of Examples 1.3 and 1.4, namely C₆H₂, C₈H₂, C₁₀H₂ obtained by PLAL and C₆H₂, C₈H₂, C₁₀H₂ obtained by SADL were subsequently separated by liquid chromatography through the set-up of Figure 3 depending on the length of the chain (sp carbon atoms) and the terminations, through isocratic mixture by means of a liquid phase based on 80% acetonitrile and 20% water and were collected in tubes. A variable mixture is not excluded for all other polyynes in the table, and therefore a gradient separation.

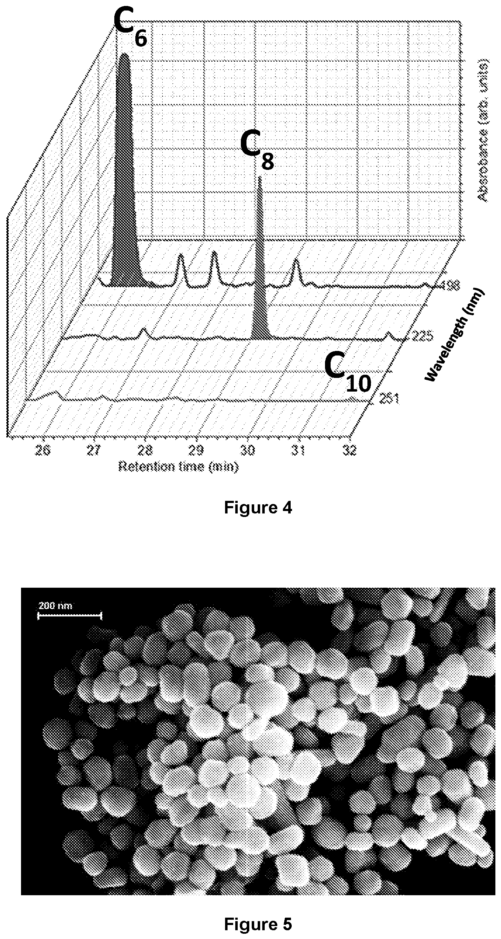

The chromatogram of active materials is reported in Figure 4.

### 1.5 Obtaining the inks of the invention

12.6 mg of commercial active material 1,4-diethynylbenzene (C₁₀H₆) (Sigma-Aldrich), weighed on a microbalance, were added under stirring for at least one minute to 10 ml of polymeric solution according to Example 1.1, i.e. a solution of PC in dioxolane (DXL) at 10% by weight.

At the end of the addition of the active material to the polymeric solution of Example 1.1, the resulting mixture was left under stirring for at least 15 minutes at ambient temperature (25 °C), so as to obtain an ink A).

A second ink B) was obtained by addition to the polymeric solution of Example 1.1, i.e. a solution of PC in dioxolane (DXL) at 10% by weight, of 142.2 mg of commercial 2,5-dimethyl-3-hexyne-2,5-diol (C₈H₁₄O₂) (Sigma-Aldrich), as active material, under stirring for at least one minute.

At the end of the addition of the active material to the polymeric solution of Example 1.1, the resulting mixture was left under stirring for at least 15 minutes at ambient temperature (25 °C), so as to obtain an ink B).

A third ink C) was obtained by addition to 10 ml of polymeric solution of Example 1.1 of 8.9 mg of (1,2-diphenylacetylene) (C₁₄H₁₀) (Sigma-Aldrich), as active material, under stirring for at least one minute.

At the end of the addition of the active material to the polymeric solution of Example 1.1, the resulting mixture was left under stirring for at least 15 minutes at ambient temperature (25 °C), so as to obtain an ink C).

From the combination of the three active materials it is possible to obtain 7 different inks, namely:
A) 1,4-diethynylbenzene (C₁₀H₆), B) 2,5-dimethyl-3-hexyne-2,5-diol (C₈H₁₄O₂) and C) 1,2-diphenylacetylene (C₁₄H₁₀), but also D) 1,4-diethynylbenzene (C₁₀H₆) + 2,5-dimethyl-3-hexyne-2,5-diol (C₈H₁₄O₂) + 1,2-diphenylacetylene (C₁₄H₁₀), E) 1,4-diethynylbenzene (C₁₀H₆) + 2,5-dimethyl-3-hexyne-2,5-diol (C₈H₁₄O₂), F) 2,5-dimethyl-3-hexyne-2,5-diol (C₈H₁₄O₂) + 1,2-diphenylacetylene (C₁₄H₁₀) and G) C₁₄H₁₀ + 1,4-diethynylbenzene (C₁₀H₆).

Further inks were obtained according to the same method of Examples 1.1-1.5, always using dioxolane as solvent, but starting from the active materials synthesized in Examples 1.2 and 1.3, or starting from commercial materials (Sigma-Aldrich) such as 1,1,3,3-tetraphenylallene ([3] Ph), 1,4-diphenylbutadiyne (DPB), 1,6-diphenoxy-2,4-hexadiyne (DH) or from further active materials according to Table 4.

**Table 4**

| **Active materials** | | **Polymeric carrier** | |
|---|---|---|---|
| **Compound** | **Concentration (Mol/L)** | **Composition** | **Concentration (% by weight)** |
| 2,5-dimethyl-3-hexyne-2,5-diol | 10⁻¹ | PC | 5 |
| 1,2-diphenylacetylene (DPA) | 5 x 10⁻³ | PC | 5 |
| 1,4-bis(2-phenylethynyl) benzene (BPB) | 5 x 10⁻³ | PC | 5 |
| 1,4-diethynylbenzene | 10⁻² | PMMA (350 kDa) + PC | 5 |

### 1.6 Synthesis of silver nanoparticles

The reaction used for the synthesis is that of Lee-Meisel (J. Phys. Chem. (1982), 86, pp.3391-3395).

A 1% concentration solution of AgNO₃, equal to 5.88 x 10⁻² M, was provided and brought to the boil, to which a 1% by weight solution of sodium citrate was added in a v/v ratio of 50:1. The solution was heated up to 90 °C and kept at this temperature for about one hour. The formation of nanoparticles is confirmed by the change of colour of the solution turning towards grey-yellow and by a SEM analysis (shown in Figure 5). The diameter of the nanoparticles was found to be about 50 nm. As for the concentration of nanoparticles used in solution, they are 3.54 x 10²² in a litre.

These silver nanoparticles can be added to the active materials of the invention, obtained according to Example 1.2 or 1.3, or to the commercial ones according to Example 1.5, in an optional step of the method of the invention, which allows the further decrease of the minimum active material concentration detectable by Raman and preferably by SERS (Surface Enhanced Raman Spectroscopy).

### Example 2 - Assembly of the anti-counterfeiting label according to the invention

The flexible polymeric support was prepared by 3D printing, with the QIDI X-Plus 3D printer of the Raise3D Premium PC filament, by creating the model of the substrate on the Autodesk Fusion 360 software and by setting the printing parameters using the QIDI Print slicer software. The thickness of the polymeric support is equal to 2 mm (to which, after deposition of the inks, a PC layer 1 mm thick is added as protection of the same), the lateral dimensions are 3 x 3.4 cm. The cavities have a diameter of 3 mm with a depth equal to 1.4 mm, the mutual distance is 1 mm.

The inks A), B) and C) prepared in Example 1.5 from commercial active materials (Sigma-Aldrich).

Subsequently, 300 microlitres, divided into 10 microlitres per cavity, of inks A) - C) were deposited in a precise sequence, reported in Figure 7.

Subsequently, a 1 mm thick transparent PC polycarbonate film was deposited by gluing with dioxolane solvent (DXL).

Figure 6 depicts a schematic sequence of deposition of the 7 inks on a support having 30 cavities, so as to obtain an anti-counterfeiting label of the invention, as depicted in Figure 7.

### Example 3 - Analysis by Raman of the anti-counterfeiting label according to the invention

The label assembled in Example 2 and shown in Figure 7, was analysed by means of bench Raman (Renishaw inVia Raman microscope), with each single acquisition lasting 0.5 seconds in the dark, for a total of 46 seconds of acquisition, or portable Raman (Cora 100 by Anton-Paar) (Figure 8), with each single acquisition lasting 3 seconds in the light and a shift from one cavity to another of 1 second, for a total of 2 minutes of acquisition. 30 different Raman spectra were detected, depending on the combination of one or more active materials inserted in the 7 different inks, deposited in the specific sequence of Example 2 in the 30 cavities.

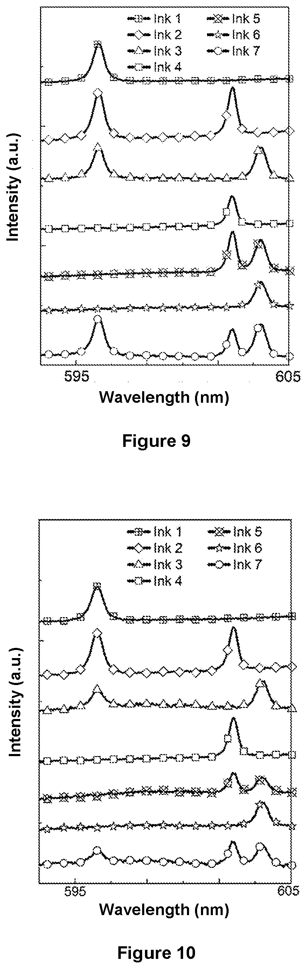

Figure 9 depicts the Raman spectra that clearly and distinctly identify the individual inks deposited in the individual cavities.

### Example 4 - Resistance and stability tests

### 4.1 - Stability test of the signal of the anti-counterfeiting label of the invention over time

Three labels were prepared according to Example 2 by using commercial inks as per Example 1.5. Immediately after their preparation, they were analysed by means of bench Raman (Renishaw inVia Raman microscope), with each individual acquisition lasting 0.5 seconds in the light, for a total of 46 seconds of acquisition, detecting the active materials inside the inks prepared according to Example 1.5. The Raman spectra, recorded immediately after deposition, are reported in Figure 9.

The measurement was subsequently repeated after 1 year and showed (Figure 10) a stability of the Raman signal of the active material inside the anti-counterfeiting label and a clear distinguishability and reproducibility of the Raman peaks of the individual deposited inks.

### 4.2 - Temperature ink signal stability test

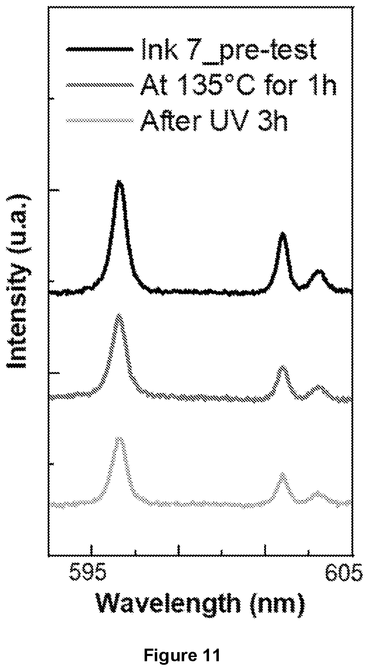

The ink 7) prepared according to Example 1.5, i.e. having therein the combination of three active materials and whose signal, when deposited in the label of the invention, has been shown in Figure 9, was deposited by drop casting and allowed to air dry under a hood for about 30 minutes and solidified on a silicon substrate. A Raman spectrum was recorded on the ink thus deposited operating under the same conditions reported in Example 3; the spectrum thus obtained is reported as the spectrum in the upper part of Figure 11.

Immediately after its preparation the solidified ink was placed in a furnace from 20 °C to 135 °C increasing by 4 °C/min and keeping the temperature at 135 °C for 1 hour. After this treatment, the Raman signal characteristic of the ink deposited by drop casting on silicon substrate was still clearly detectable by the Raman spectrometer, as shown by the spectrum recorded under the same conditions as in Example 3 and reported as the central spectrum in Figure 11.

This demonstrates the stability of the inks used in the anti-counterfeiting labels of the invention at different, even critical, temperature conditions.

### 4.3 - UV radiation ink signal stability test

The ink 7) prepared according to Example 1.5, i.e. having therein the combination of three active materials and whose signal, when deposited in the label of the invention, has been shown in Figure 9, was deposited by drop casting and allowed to air dry under a hood for about 30 minutes and solidified on a silicon substrate. Immediately after its preparation the solidified ink was irradiated with UV radiation at wavelengths of 300-350 nm for 3 hours and then at 190-240 nm for 1.5 hours. After this treatment, the Raman signal characteristic of the ink deposited by drop casting on silicon substrate was still clearly detectable by the Raman spectrometer, as shown by the spectrum recorded under the same conditions as in Example 3 and reported as the spectrum in the lower part of Figure 11. This demonstrates the stability of the inks used in the anti-counterfeiting labels of the invention to irradiation with UV radiation.

## Claims

1. An anti-counterfeiting label comprising:
A) a polymeric support, optionally filled with materials in the form of fibres;
B) at least three inks deposited on the polymeric support according to a defined deposition sequence; and
C) at least one transparent polymeric layer that covers said at least three inks;
wherein each ink comprises:
(i) at least one active material detectable by Raman, in the region in the range from 1500 to 2500 cm⁻¹ with source in the visible range, having a concentration in the range from 10⁻⁵ to 10⁻¹ M, and
(ii) at least one polymeric carrier;
wherein at least two of said at least three inks are different from each other;
wherein said at least three inks are deposited, the one independently of the other, in at least two distinct deposition zones of the surface of the polymeric support A); and
wherein said deposition sequence of said at least three inks in said at least two distinct zones of the surface of the polymeric support defines a numerical code.

2. Anti-counterfeiting label according to claim 1, wherein the polymeric support is made with a polymer selected from the group consisting of polycarbonate, polylactic acid, polyamide, thermoplastic polyurethane, polyethylene, cellulose, polyvinylchloride, compostable food film, butadiene-styrene, acetonitrile-butadiene-styrene, polycarbonate/acetonitrile-butadiene-styrene, polybutadiene terephthalate, polycarbonate/polybutadiene terephthalate, ethylene vinyl acetate, polyethylene terephthalate and their mixtures, optionally filled with glass or carbon fibres.

3. Anti-counterfeiting label according to any one of claims 1 or 2, wherein said at least two distinct deposition zones are in a numerical range from 2 to 40.

4. Anti-counterfeiting label according to claim 3, wherein said distinct deposition zones are from 10 to 35.

5. Anti-counterfeiting label according to any one of the preceding claims, wherein said at least two distinct deposition zones have substantially circular geometry and have a diameter in the range from 20 µm to 5 mm.

6. Anti-counterfeiting label according to claim 5, wherein said distinct deposition zones have a diameter in the range from 50 µm to 3 mm.

7. Anti-counterfeiting label according to any one of the preceding claims, wherein said at least two distinct deposition zones have a spacing in the range from 20 µm to 5 mm.

8. Anti-counterfeiting label according to claim 7, wherein said spacing is in the range from 50 µm to 3 mm.

9. Anti-counterfeiting label according to any one of the preceding claims, wherein said at least one active material detectable by Raman is selected from the group consisting of 2,5-dimethyl-3-hexyne-2,5-diol, 1,2-diphenylacetylene, 1,4-bis(2-phenylethynyl)benzene, 1,4-diethynylbenzene, 1,1,3,3-tetraphenylallene, 1,4-diphenylbutadiyne, 1,6-diphenoxy-2,4-hexadiyne, 9,10-bis(phenylethynyl)anthracene, Bis(4-bromophenyl)acetylene, Bis(3-bromophenyl)acetylene, Bis(2-bromophenyl)acetylene, 1-ethynyl-4-(phenylethynyl)benzene, 4-(4-fluorophenylethynyl)phenol, 1-ethoxy-4-(p-tolylethynyl)benzene, 1-ethyl-4-[(4-methoxyphenyl)ethynyl]benzene, 1-bromo-4-(phenylethynyl)benzene, dimethylbis(phenylethynyl)silane, 1-(4-methoxyphenyl)ethynyl-4-pentylbenzene, 4,4'-(ethylene-1,2-diyl)diphthalic anhydride, 1,4-bis(4-bromophenyl-1,3-butadiyne, diphenylbis(phenylethynyl)silane, 1-chloro-4-(phenylethynyl)benzene, 4'-(phenylethynyl)acetophenone, hexa-1,3,5-triyne, octa-1,3,5,7-tetrayne, deca-1,3,5,7,9-pentayne and their mixtures.

10. Anti-counterfeiting label according to any one of the preceding claims, wherein the at least one active material detectable by Raman of said each ink is in a concentration comprised between 10⁻⁵ M and 10⁻¹ M.

11. Anti-counterfeiting label according to claim 10, wherein the at least one active material detectable by Raman of said each ink is in a concentration comprised between 2 x 10⁻⁴ M and 2 x 10⁻² M.

12. Anti-counterfeiting label according to any one of the preceding claims, wherein the at least one polymeric carrier of each ink is formed by a polymer selected from the group consisting of: polycarbonate, polylactic acid, polyamide, thermoplastic polyurethane, polyethylene, cellulose, polyvinyl chloride, compostable food film, butadiene-styrene, acetonitrile-butadiene-styrene, polycarbonate/acetonitrile-butadiene-styrene, polybutadiene terephthalate, polycarbonate/polybutadiene terephthalate, ethylene vinyl acetate, polyethylene terephthalate, inorganic materials, polymethylmethacrylate, polyvinyl alcohol, polyethylene oxide and their mixtures.

13. Method for preparing each of the at least three inks of claim 1, which comprises the steps of:
a) mixing at least one polymeric carrier selected from the group consisting of polycarbonate, polylactic acid, polyamide, thermoplastic polyurethane, polyethylene, cellulose, polyvinylchloride, compostable food film, butadiene-styrene, acetonitrile-butadiene-styrene, polycarbonate/acetonitrile-butadiene-styrene, polyethylene terephthalate, polybutadiene terephthalate, polycarbonate/polybutadiene terephthalate, ethylene vinyl acetate, inorganic materials, polymethylmethacrylate, polyvinyl alcohol, polyethylene oxide and their mixture, with at least one solvent selected from the group consisting of water, methanol, ethanol, isopropanol, acetonitrile, acetic acid, trifluoroacetic acid, decalin, dichloromethane, dibromomethane, 1,3-dioxolane, cyclohexane, acetone, dimethylsulfoxide, tetrahydrofuran, ethyl acetate, methyl ethyl ketone, N,N-dimethylformamide, amyl alcohol, ethanolamine, toluene, formic acid and their mixture, so as to obtain a polymeric solution;
b) solubilizing at least one material detectable by Raman in the region in the range 1500 to 2500 cm⁻¹ with source in the visible range, in the polymeric solution of step a) so as to obtain an ink;
wherein the ink of step b) has a viscosity at 25 °C comprised in a range from 2 to 20 cP when measured by means of an Anton Paar MCR 502 rheometer with a parallel plates measuring system; and
wherein the ink of step b) has a concentration of the at least one active material comprised in the range between 10⁻⁵ and 10⁻¹ M with respect to the total ink.

14. Method for producing an anti-counterfeiting label according to any one of the preceding claims, comprising the steps of:
c) providing a polymeric support, optionally filled with materials in the form of fibres;
d) providing at least three inks prepared in accordance with the method of claim 13, provided that at least two of said at least three inks are different from each other,
e) assigning an identification number to each ink;
f) depositing according to a defined deposition sequence each of the at least three inks, of which at least two different, in at least two distinct zones of the surface of the polymeric support through a technique selected from the group consisting of spin coating, drop casting, inkjet printing, bar coating or drop casting, in a defined deposition sequence;
g) depositing at least one transparent polymeric layer above the polymeric support so as to cover said at least two distinct zones of its surface;
h) obtaining a numerical code from the deposition sequence of said at least three inks in said at least two distinct zones of the surface of the polymeric support, each identified with an identification number assigned in step e),
obtaining an anti-counterfeiting label, identified through the numerical code of step h).

15. A method for determining the authenticity of an item provided with a security code which comprises the steps of:
i) providing an anti-counterfeiting label of any one of claims from 1 to 12;
l) applying said anti-counterfeiting label of step i) to an original item;
m) irradiating said anti-counterfeiting label with a monochromatic light source with wavelength in the field of the visible range;
n) obtaining spectral data, in the form of Raman spectrum by means of Raman Spectroscopy or SERS, in the region from 1500 to 2500 cm⁻¹, from the light diffused by the anti-counterfeiting label following irradiation of step m);
o) comparing the spectral data obtained in step n) with reference data, to uniquely indicate the authenticity of said item;
wherein the irradiation of step m) and the obtaining of the spectral data are performed according to a predefined sequence on the inks in the anti-counterfeiting label of the invention, and such as to generate a unique code for the label.

## Patentansprüche

1. Fälschungssicheres Etikett, umfassend:
A) einen polymeren Träger, der gegebenenfalls mit Materialien in Form von Fasern gefüllt ist;
B) mindestens drei Tinten, die in einer definierten Aufbringungsreihenfolge auf dem polymeren Träger aufgebracht sind; und
C) mindestens eine transparente Polymerschicht, die die mindestens drei Tinten bedeckt; wobei jede Tinte umfasst:
(i) mindestens ein aktives Material, das mittels Raman im Bereich von 1500 bis 2500 cm⁻¹ mit einer Quelle im sichtbaren Spektrum nachweisbar ist und eine Konzentration im Bereich von 10⁻⁵ bis 10⁻¹ M aufweist, und
(ii) mindestens einen polymeren Trägerstoff;
wobei sich mindestens zwei der mindestens drei Tinten voneinander unterscheiden;
wobei die mindestens drei Tinten unabhängig voneinander in mindestens zwei unterschiedlichen Aufbringungszonen auf der Oberfläche des polymeren Trägers A) aufgebracht sind; und
wobei die Aufbringungsreihenfolge der mindestens drei Tinten in den mindestens zwei unterschiedlichen Zonen auf der Oberfläche des polymeren Trägers einen numerischen Code definiert.

2. Fälschungssicheres Etikett nach Anspruch 1, wobei der polymere Träger aus einem Polymer hergestellt ist, das aus der Gruppe ausgewählt ist, bestehend aus Polycarbonat, Polymilchsäure, Polyamid, thermoplastischem Polyurethan, Polyethylen, Cellulose, Polyvinylchlorid, kompostierbarer Lebensmittelfolie, Butadien-Styrol, Acetonitril-Butadien-Styrol, Polycarbonat/Acetonitril-Butadien-Styrol, Polybutadienterephthalat, Polycarbonat/Polybutadienterephthalat, Ethylen-Vinylacetat, Polyethylenterephthalat und deren Mischungen, gegebenenfalls mit Glas- oder Kohlenstofffasern gefüllt.

3. Fälschungssicheres Etikett nach einem der Ansprüche 1 oder 2, wobei die mindestens zwei unterschiedlichen Aufbringungszonen in einem Zahlenbereich von 2 bis 40 liegen.

4. Fälschungssicheres Etikett nach Anspruch 3, wobei die unterschiedlichen Aufbringungszonen zwischen 10 und 35 betragen.

5. Fälschungssicheres Etikett nach einem der vorhergehenden Ansprüche, wobei die mindestens zwei unterschiedlichen Aufbringungszonen eine im Wesentlichen kreisförmige Geometrie aufweisen und einen Durchmesser im Bereich von 20 µm bis 5 mm aufweisen.

6. Fälschungssicheres Etikett nach Anspruch 5, wobei die unterschiedlichen Aufbringungszonen einen Durchmesser im Bereich von 50 µm bis 3 mm aufweisen.

7. Fälschungssicheres Etikett nach einem der vorhergehenden Ansprüche, wobei die mindestens zwei unterschiedlichen Aufbringungszonen einen Abstand im Bereich von 20 µm bis 5 mm aufweisen.

8. Fälschungssicheres Etikett nach Anspruch 7, wobei der Abstand im Bereich von 50 µm bis 3 mm liegt.

9. Fälschungssicheres Etikett nach einem der vorhergehenden Ansprüche, wobei das mindestens eine durch Raman nachweisbare aktive Material aus der Gruppe ausgewählt ist, bestehend aus 2,5-Dimethyl-3-hexin-2,5-diol, 1,2-Diphenylacetylen, 1,4-Bis(2-phenylethinyl)benzol, 1,4-Diethinylbenzol, 1,1,3,3-Tetraphenylallen, 1,4-Diphenylbutadiyn, 1,6-Diphenoxy-2,4-hexadiyn, 9,10-Bis(phenylethinyl)anthracen, Bis(4-bromphenyl)acetylen, Bis(3-bromphenyl)acetylen, Bis(2-bromphenyl)acetylen, 1-Ethinyl-4-(phenylethinyl)benzol, 4-(4-Fluorphenylethinyl)phenol, 1-Ethoxy-4-(p-tolylethinyl)benzol, 1-Ethyl-4-[(4-methoxyphenyl)ethinyl]benzol, 1-Brom-4-(phenylethinyl)benzol, Dimethylbis(phenylethinyl)silan, 1-(4-Methoxyphenyl)ethinyl-4-pentylbenzol, 4,4'-(Ethylen-1,2-diyl)diphthalsäureanhydrid, 1,4-Bis(4-bromphenyl-1,3-butadiyn, Diphenylbis(phenylethinyl)silan, 1-Chlor-4-(phenylethinyl)benzol, 4'-(Phenylethinyl)acetophenon, Hexa-1,3,5-triyn, Octa-1,3,5,7-tetrayn, Deca-1,3,5,7,9-pentayn und deren Mischungen.

10. Fälschungssicheres Etikett nach einem der vorhergehenden Ansprüche, wobei das mindestens eine durch Raman nachweisbare aktive Material jeder der Tinten in einer Konzentration zwischen 10⁻⁵ M und 10⁻¹ M vorliegt.

11. Fälschungssicheres Etikett nach Anspruch 10, wobei das mindestens eine durch Raman nachweisbare aktive Material jeder der Tinten in einer Konzentration zwischen 2 x 10⁻⁴ M und 2 x 10⁻² M vorliegt.

12. Fälschungssicheres Etikett nach einem der vorhergehenden Ansprüche, wobei der mindestens eine polymere Trägerstoff jeder Tinte aus einem Polymer gebildet ist, das aus der Gruppe ausgewählt ist, bestehend aus: Polycarbonat, Polymilchsäure, Polyamid, thermoplastischem Polyurethan, Polyethylen, Cellulose, Polyvinylchlorid, kompostierbarer Lebensmittelfolie, Butadien-Styrol, Acetonitril-Butadien-Styrol, Polycarbonat/Acetonitril-Butadien-Styrol, Polybutadienterephthalat, Polycarbonat/Polybutadienterephthalat, Ethylen-Vinylacetat, Polyethylenterephthalat, anorganischen Materialien, Polymethylmethacrylat, Polyvinylalkohol, Polyethylenoxid und deren Mischungen.

13. Verfahren zur Herstellung jeder der mindestens drei Tinten nach Anspruch 1, das die Schritte umfasst:
a) Mischen mindestens eines polymeren Trägerstoffs, der aus der Gruppe ausgewählt ist, bestehend aus Polycarbonat, Polymilchsäure, Polyamid, thermoplastischem Polyurethan, Polyethylen, Cellulose, Polyvinylchlorid, kompostierbarer Lebensmittelfolie, Butadien-Styrol, Acetonitril-Butadien-Styrol, Polycarbonat/Acetonitril-Butadien-Styrol, Polyethylenterephthalat, Polybutadienterephthalat, Polycarbonat/Polybutadienterephthalat, Ethylenvinylacetat, anorganischen Materialien, Polymethylmethacrylat, Polyvinylalkohol, Polyethylenoxid und deren Mischungen, mit mindestens einem Lösungsmittel, das aus der Gruppe ausgewählt ist, bestehend aus Wasser, Methanol, Ethanol, Isopropanol, Acetonitril, Essigsäure, Trifluoressigsäure, Decalin, Dichlormethan, Dibrommethan, 1,3-Dioxolan, Cyclohexan, Aceton, Dimethylsulfoxid, Tetrahydrofuran, Ethylacetat, Methylethylketon, N, N-Dimethylformamid, Amylalkohol, Ethanolamin, Toluol, Ameisensäure und deren Mischungen, um eine Polymerlösung zu erhalten;
b) Solubilisieren mindestens eines Materials, das mittels Raman im Bereich von 1500 bis 2500 cm⁻¹ mit einer Quelle im sichtbaren Spektrum nachweisbar ist, in der Polymerlösung aus Schritt a), um eine Tinte zu erhalten;
wobei die Tinte aus Schritt b) bei 25 °C eine Viskosität im Bereich von 2 bis 20 cP aufweist, gemessen mittels eines Anton-Paar-MCR-502-Rheometers mit einem Parallelplatten-Messsystem; und
wobei die Tinte aus Schritt b) eine Konzentration des mindestens einen aktiven Materials im Bereich zwischen 10⁻⁵ und 10⁻¹ M, bezogen auf die Gesamtmenge der Tinte, aufweist.

14. Verfahren zur Herstellung eines fälschungssicheren Etiketts nach einem der vorhergehenden Ansprüche, umfassend die Schritte:
c) Bereitstellen eines polymeren Trägers, der gegebenenfalls mit Materialien in Form von Fasern gefüllt ist;
d) Bereitstellen von mindestens drei Tinten, die nach dem Verfahren nach Anspruch 13 hergestellt wurden, wobei sich mindestens zwei der mindestens drei Tinten voneinander unterscheiden,
e) Zuweisen einer Identifikationsnummer zu jeder Tinte;
f) Aufbringen jeder der mindestens drei Tinten, von denen mindestens zwei unterschiedlich sind, gemäß einer definierten Aufbringungsreihenfolge auf mindestens zwei unterschiedliche Zonen der Oberfläche des polymeren Trägers mittels einer Technik, die aus der Gruppe ausgewählt ist, bestehend aus Rotationsbeschichtung, Drop-Casting, Tintenstrahldruck, Rakelstreichen oder Drop-Casting, **in** einer definierten Aufbringungsreihenfolge;
g) Aufbringen mindestens einer transparenten Polymerschicht auf den polymeren Träger, um die mindestens zwei unterschiedlichen Zonen seiner Oberfläche zu bedecken;
h) Erhalten eines numerischen Codes aus der Aufbringungsreihenfolge der mindestens drei Tinten in den mindestens zwei unterschiedlichen Zonen der Oberfläche des polymeren Trägers, die jeweils mit einer in Schritt e) zugewiesenen Identifikationsnummer identifiziert sind,
wobei ein fälschungssicheres Etikett erhalten wird, das durch den numerischen Code aus Schritt h) identifiziert wird.

15. Verfahren zur Bestimmung der Authentizität eines mit einem Sicherheitscode versehenen Gegenstands, das die Schritte umfasst:
i) Bereitstellen eines fälschungssicheren Etiketts nach einem der Ansprüche 1 bis 12;
I) Anbringen des fälschungssicheren Etiketts aus Schritt i) an einem Originalgegenstand;
m) Bestrahlen des fälschungssicheren Etiketts mit einer monochromatischen Lichtquelle mit einer Wellenlänge im Bereich des sichtbaren Spektrums;
n) Erhalten von Spektraldaten in Form eines Raman-Spektrums mittels Raman-Spektroskopie oder SERS im Bereich von 1500 bis 2500 cm⁻¹ aus dem von dem fälschungssicheren Etikett nach der Bestrahlung in Schritt m) gestreuten Licht;
o) Vergleichen der in Schritt n) erhaltenen Spektraldaten mit Referenzdaten, um die Authentizität des Gegenstands eindeutig anzugeben;
wobei die Bestrahlung gemäß Schritt m) und das Erhalten der Spektraldaten gemäß einer vordefinierten Reihenfolge auf den Tinten in dem fälschungssicheren Etikett der Erfindung durchgeführt werden, und zwar derart, dass ein eindeutiger Code für das Etikett erzeugt wird.

## Revendications

1. Etiquette anti-contrefaçon comprenant :
A) un support polymérique, éventuellement chargé de matériaux sous forme de fibres ;
B) au moins trois encres déposées sur le support polymère selon une séquence de dépôt définie ; et
C) au moins une couche polymère transparente qui recouvre lesdites au moins trois encres ; dans lequel chaque encre comprend :
(i) au moins une matière active détectable par Raman, dans la région comprise entre 1500 et 2500 cm⁻¹ avec une source dans le domaine visible, ayant une concentration comprise entre 10⁻⁵ et 10⁻¹ M, et
(ii) au moins un support polymère ;
dans lequel au moins deux desdites au moins trois encres sont différentes l'une de l'autre ;
dans lequel lesdites au moins trois encres sont déposées, l'une indépendamment de l'autre, dans au moins deux zones de dépôt distinctes de la surface du support polymère A) ; et
dans lequel ladite séquence de dépôt desdites au moins trois encres dans lesdites au moins deux zones distinctes de la surface du support polymère définit un code numérique.

2. Etiquette anti-contrefaçon selon la revendication 1, dans laquelle le support polymère est fabriqué avec un polymère choisi dans le groupe constitué par : polycarbonate, acide polylactique, polyamide, polyuréthane thermoplastique, polyéthylène, cellulose, polychlorure de vinyle, film alimentaire compostable, butadiène-styrène, acétonitrile-butadiène-styrène, polycarbonate/acétonitrile-butadiène-styrène, polybutadiène téréphtalate, polycarbonate/polybutadiène téréphtalate, éthylène-acétate de vinyle, polyéthylène téréphtalate et leurs mélanges, éventuellement chargés de fibres de verre ou de carbone.

3. Etiquette anti-contrefaçon selon l'une quelconque des revendications 1 ou 2, dans laquelle lesdites au moins deux zones de dépôt distinctes sont dans une plage numérique de 2 à 40.

4. Etiquette anti-contrefaçon selon la revendication 3, dans laquelle lesdites zones de dépôt distinctes sont de 10 à 35.

5. Etiquette anti-contrefaçon selon l'une quelconque des revendications précédentes, dans laquelle lesdites au moins deux zones de dépôt distinctes ont une géométrie sensiblement circulaire et ont un diamètre compris entre 20 µm et 5 mm.

6. Etiquette anti-contrefaçon selon la revendication 5, dans laquelle lesdites zones de dépôt distinctes ont un diamètre compris entre 50 µm et 3 mm.

7. Etiquette anti-contrefaçon selon l'une quelconque des revendications précédentes, dans laquelle lesdites au moins deux zones de dépôt distinctes ont un espacement compris entre 20 µm et 5 mm.

8. Etiquette anti-contrefaçon selon la revendication 7, dans laquelle ledit espacement est compris entre 50 µm et 3 mm.

9. Etiquette anti-contrefaçon selon l'une quelconque des revendications précédentes, dans laquelle ladite au moins une matière active détectable par Raman est choisie dans le groupe constitué par : 2,5-diméthyl-3-hexyne-2,5-diol, 1,2-diphénylacétylène, 1,4-bis(2-phényléthynyl)benzène, 1,4-diéthynylbenzène, 1,1,3,3-tétraphénylallène, 1,4-diphénylbutadiyne, 1,6-diphénoxy-2,4-hexadiyne, 9,10-bis(phényléthynyl)anthracène, bis(4-bromophényl)acétylène, bis(3-bromophényl)acétylène, bis(2-bromophényl)acétylène, 1-éthynyl-4-(phényléthynyl)benzène, 4-(4-fluorophényléthynyl)phénol, 1-éthoxy-4-(p-tolyléthynyl)benzène, 1-éthyl-4-[(4-méthoxyphényl)éthynyl]benzène, 1-bromo-4-(phényléthynyl)benzène, diméthylbis(phényléthynyl)silane, 1-(4-méthoxyphényl)éthynyl-4-pentylbenzène, anhydride diphtalique 4,4'-(éthylène-1,2-diyle), 1,4-bis(4-bromophényl-1,3-butadiyne, diphénylbis(phényléthynyl)silane, 1-chloro-4-(phényléthynyl)benzène, 4'-(phényléthynyl)acétophénone, hexa-1,3,5-triyne, octa-1,3,5,7-tétrayne, déca-1,3,5,7,9-pentayne et leurs mélanges.

10. Etiquette anti-contrefaçon selon l'une quelconque des revendications précédentes, dans laquelle l'au moins une matière active détectable par Raman de dite chaque encre est à une concentration comprise entre 10⁻⁵ M et 10⁻¹ M.

11. Etiquette anti-contrefaçon selon la revendication 10, dans laquelle l'au moins une matière active détectable par Raman de chaque dite encre est à une concentration comprise entre 2 x 10⁻⁴ M et 2 x 10⁻² M.

12. Etiquette anti-contrefaçon selon l'une quelconque des revendications précédentes, dans laquelle l'au moins un support polymère de chaque encre est formé par un polymère choisi dans le groupe constitué par : polycarbonate, acide polylactique, polyamide, polyuréthane thermoplastique, polyéthylène, cellulose, chlorure de polyvinyle, film alimentaire compostable, butadiène-styrène, acétonitrile-butadiène-styrène, polycarbonate/acétonitrile-butadiène-styrène, polybutadiène téréphtalate, polycarbonate/polybutadiène téréphtalate, éthylène-acétate de vinyle, polyéthylène téréphtalate, matériaux inorganiques, polyméthacrylate de méthyle, alcool polyvinylique, oxyde de polyéthylène et leurs mélanges.

13. Procédé de préparation de chacune des au moins trois encres selon la revendication 1, qui comprend les étapes consistant à :
a) mélanger au moins un support polymère choisi dans le groupe constitué par : polycarbonate, acide polylactique, polyamide, polyuréthane thermoplastique, polyéthylène, cellulose, polychlorure de vinyle, film alimentaire compostable, butadiène-styrène, acétonitrile-butadiène-styrène, polycarbonate/acétonitrile-butadiène-styrène, polyéthylène téréphtalate, polybutadiène téréphtalate, polycarbonate/polybutadiène téréphtalate, éthylène-acétate de vinyle, matériaux inorganiques, polyméthacrylate de méthyle, alcool polyvinylique, polyoxyde d'éthylène et leur mélange, avec au moins un solvant choisi dans le groupe constitué par : eau, méthanol, éthanol, isopropanol, acétonitrile, acide acétique, acide trifluoroacétique, décaline, dichlorométhane, dibromométhane, 1,3-dioxolane, cyclohexane, acétone, diméthylsulfoxyde, tétrahydrofurane, acétate d'éthyle, méthyléthylcétone, N,N-diméthylformamide, alcool amylique, éthanolamine, toluène, acide formique et leur mélange, de manière à obtenir une solution polymérique ;
b) solubiliser au moins un matériau détectable par Raman dans la région comprise entre 1500 et 2500 cm⁻¹ avec une source dans le domaine visible, dans la solution polymère de l'étape a) de manière à obtenir une encre ;
dans lequel l'encre de l'étape b) a une viscosité à 25 °C comprise dans une plage de 2 à 20 cP lorsqu'elle est mesurée au moyen d'un rhéomètre Anton Paar MCR 502 avec un système de mesure à plaques parallèles ; et
dans lequel l'encre de l'étape b) a une concentration de l'au moins une matière active comprise entre 10⁻⁵ et 10⁻¹ M par rapport à l'encre totale.

14. Procédé de production d'une étiquette anti-contrefaçon selon l'une quelconque des revendications précédentes, comprenant les étapes consistant à :
c) fournir un support polymère, éventuellement chargé de matériaux sous forme de fibres ;
d) fournir au moins trois encres préparées selon le procédé de la revendication 13, à condition qu'au moins deux desdites au moins trois encres soient différentes l'une de l'autre,
e) attribuer un numéro d'identification à chaque encre ;
f) déposer selon une séquence de dépôt définie chacune des au moins trois encres, dont au moins deux différentes, dans au moins deux zones distinctes de la surface du support polymère à travers une technique choisie dans le groupe constitué par : revêtement par centrifugation, coulée goutte à goutte, impression par jet d'encre, revêtement par barre ou coulée goutte à goutte, dans une séquence de dépôt définie ;
g) déposer au moins une couche polymère transparente au-dessus du support polymère de manière à recouvrir lesdites au moins deux zones distinctes de sa surface ;
h) obtenir un code numérique à partir de la séquence de dépôt desdites au moins trois encres dans lesdites au moins deux zones distinctes de la surface du support polymère, chacune identifiée par un numéro d'identification attribué à l'étape e),
obtenir une étiquette anti-contrefaçon, identifiée par le code numérique de l'étape h).

15. Procédé pour déterminer l'authenticité d'un article muni d'un code de sécurité qui comprend les étapes consistant à :
i) fournir une étiquette anti-contrefaçon selon l'une quelconque des revendications de 1 à 12 ;
l) appliquer ladite étiquette anti-contrefaçon de l'étape i) sur un article d'origine ;
m) irradier ladite étiquette anti-contrefaçon avec une source de lumière monochromatique avec une longueur d'onde dans le domaine du visible ;
n) obtenir des données spectrales, sous forme de spectre Raman au moyen de la spectroscopie Raman ou SERS, dans la région de 1500 à 2500 cm⁻¹, à partir de la lumière diffusée par l'étiquette anti-contrefaçon suite à l'irradiation de l'étape m) ;
o) comparer les données spectrales obtenues à l'étape n) avec des données de référence, pour indiquer de manière unique l'authenticité dudit élément ;
dans lequel l'irradiation de l'étape m) et l'obtention des données spectrales sont effectuées selon une séquence prédéfinie sur les encres dans l'étiquette anti-contrefaçon de l'invention, et de manière à générer un code unique pour l'étiquette.
